# EUROPEAN PATENT SPECIFICATION

(11) **EP 4 384 871 B1**
(45) Date of publication and mention of the grant of the patent: **21.10.2026**
(21) Application number: 22764660.1
(22) Date of filing: 08.08.2022
(51) Int. Cl.: G02F 1/35, G02F 1/377

(54) **AN OPTICAL SYSTEM FOR FREQUENCY CONVERSION OF A SINGLE PHOTON**
OPTISCHES SYSTEM ZUR FREQUENZUMSETZUNG EINES EINZELPHOTONS
SYSTÈME OPTIQUE DE CONVERSION DE FRÉQUENCE D'UN PHOTON UNIQUE

(30) Priority: 10.08.2021 EP 21190664; 24.03.2022 EP 22163979
(43) Date of publication of application: 19.06.2024
(73) Proprietor: Aarhus Universitet, 8000 Aarhus C (DK)
(72) Inventor: ULSIG, Emil Zanchetta, 8000 Aarhus C (DK); VOLET, Nicolas, 8000 Aarhus C (DK); DEGLI-EREDI, Iterio Anestis R, 9000 Gent (BE)
(74) Representative: Plougmann Vingtoft a/s
(86) International application number: PCT/EP2022/072190
(87) International publication number: WO 2023/016962

(56) References cited:
- WO-A1-2018/106765
- CN-A- 109 739 061
- US-A1- 2007 228 373
- US-B1- 10 274 809
- US-B1- 11 048 143
- US-B2- 8 433 200
- ULSIG EMIL Z ET AL: "Second-order nonlinear effects in InGaAsP waveguides for efficient wavelength conversion to the mid-infrared", PROCEEDINGS OF SPIE, SPIE, 1000 20TH ST. BELLINGHAM WA 98225-6705 USA, vol. 11670, 5 March 2021 (2021-03-05), pages 116700U - 116700U, XP060142099, ISSN: 0277-786X, ISBN: 978-1-5106-4548-6, DOI: 10.1117/12.2581819

## Description

### FIELD OF THE INVENTION

The present invention relates to an optical system for converting the frequency of a single photon and a method for converting the frequency of a single photon by difference-frequency generation (DFG) and a frequency converter.

### BACKGROUND OF THE INVENTION

Single photon may be used in fields like random number generation, quantum metrology, quantum lithography and quantum-information such as quantum computations and quantum key distribution (QKD). It is desired to have the single photons in the spectral range of the telecom C-band (with wavelengths in the range 1530-1565 nm), enabling to use them for long-range quantum telecommunication and standard integrated components for optical switching.

Single photons can amongst other techniques, be generated by semiconductor quantum-dots (QD) and state-of-the-art devices are commercially available. However, many single-photon sources as well as quantum dots emits in the visible (VIS, 400-700 nm) or near-infrared (NIR, 700-2000 nm) spectrum. This limits their application in long-range quantum networks because of high absorption losses in optical fibers. However, optical silica-based single-mode fibers have low-loss in the telecom C-band, and thus single-photon emission near 1550 nm is desired for long-range quantum telecommunication.

Single-photon sources emitting directly in the telecom C-band are advancing, however quantum dots are desired for several of their quantum properties. As an alternative to direct telecom emission, one can employ second-order nonlinear frequency conversion, an effect that preserves the quantum states of the single photons. This effect has been thoroughly investigated in recent years, for both entangled photon-pairs and nonlinear conversion of the VIS/NIR to the telecom C-band. The nonlinear conversion is achieved by the single photon interacting with a laser irradiation, also called an idler, by difference-frequency generation (DFG) in a suitable material. However, this nonlinear conversion has to our knowledge only been shown for DFG in periodically poled lithium niobate (PPLN) nonlinear waveguides. PPLN waveguides are commercially available and tailored for specific DFG wavelengths. However, they are expensive, exhibit a relatively low second-order nonlinear susceptibility and have weak optical confinement compared to other nonlinear materials.

US 7,768,692 B2 discloses a single-photon generator which includes a single-photon generating device generating a single-photon pulse having a wavelength on the shorter wavelength side than the communication wavelength band, and a single-photon wavelength conversion device performing wavelength conversion of the single-photon pulse into a single-photon pulse of the communication wavelength band, using pump pulse light for single-photon wavelength conversion. However, US 7,768,692 B2 is using lenses and mirrors for directing the single photon and the light to the conversion device. Further, US 7,768,692 B2 is using PPLN (periodically-poled Lithium Niobate; LiNbO₃.).

Existing solutions, like US 7,768,692 B2, are using mirrors and lenses for directing the laser irradiation and the single photons into the right positions, making a demand to alignment of the optical components. This is cumbersome, troublesome and expensive to set up the optical components using free space optics. Further, the use of PPLN is not optimal for nonlinear waveguides as they are expensive, exhibits a lower second-order nonlinear conversion efficiency than other techniques and has poor optical confinement.

WO2018/106765 A1 discloses an optical quantum state converter comprising an optical fiber input port configured to receive an optical signal, comprising an optical quantum state at a first wavelength from an optical source. An optical combiner having a first input is coupled to the fiber input port. The tuneable optical pump source provides an optical pump signal at a pump optical signal wavelength to the second input of the combiner. A tuneable nonlinear optical waveguide has an input that is coupled to an output of the optical combiner. The tuneable nonlinear optical waveguide converting the wavelength of the input optical signal comprising the optical quantum state at the first wavelength to a second wavelength determined by the optical pump signal at the pump optical signal wavelength. WO2018/106765 A1 discloses a packaged system of different components.

The article "Second-order nonlinear effects in InGaAsP waveguides for efficient wavelength conversion to the mid-infrared" by Ulsig and Volet published in Proceedings of SPIE, Vol. 11670, 5 march 2021, pages 116700U-116700U discloses simulations predicting perfect phase matching for difference frequency generation (DFG) in a nonlinear waveguide.

Hence, an improved device and method for single-photon conversion would be advantageous, and in particular a more efficient and/or reliable and robust device would be advantageous.

### OBJECT OF THE INVENTION

In particular, it may be seen as an object of the present invention to provide an optical system for single-photon conversion that solves the above mentioned problems of the prior art with expensive nonlinear waveguides with relatively low second-order susceptibility. Further, it is an object to make a more robust and compact device with a minimum of optical equipment needing alignment.

It is a further object of the present invention to provide an alternative to the prior art.

### SUMMARY OF THE INVENTION

Thus, the above described object and several other objects are intended to be obtained in a first aspect of the invention by providing an optical system for frequency conversion of a first wavelength (λₚ) of a single photon by difference-frequency generation (DFG), wherein the optical system comprising
- a single-photon source to supplying a single photon with a first wavelength (λₚ),
- a laser source for generating laser irradiation with a second wavelength (λᵢ),
- a multiplexer, being arranged for combining and coupling the single photon and the laser irradiation, and
- a nonlinear waveguide, comprising a second-order nonlinear optical susceptibility material for frequency conversion of the single photon,
wherein the multiplexer and the nonlinear waveguide are structurally integrated on a compact platform, the compact platform is a photonic integrated circuit **(PIC),** the multiplexer optically combines the laser irradiation and the single photon, and optically transmits the combined laser irradiation and single photon to the nonlinear waveguide, which is optically connected to the multiplexer, for frequency conversion of the single photon in the nonlinear waveguide by difference-frequency generation by optically interacting with the laser irradiation and the waveguide material, so as to frequency convert the single photon from the first wavelength (λₚ) to a third wavelength (λₛ).

The invention allows for a compact and efficient frequency conversion of single photons to the telecom C-band by employing difference-frequency generation (DFG) in a nonlinear waveguide. Difference-frequency generation (DFG) is a non-linear optical process, which is generating irradiation with a frequency that is the difference between two other frequencies. In this case, a single photon with a third wavelength is generated by DFG of a single photon with a first wavelength interacting with laser irradiation with a second wavelength and the material of the nonlinear waveguide. Another way to look at it, is that the wavelength of the single photon is converted from being a first wavelength to being a third wavelength.

The single-photon source for supplying a single photon with a first wavelength (λₚ) may be a semiconductor quantum-dot (QD) or any other kind of single-photon source.

The laser source may be a laser diode, or any other kind of laser emitting laser irradiation at the required wavelength.

On a compact platform, which preferably may be a photonic integrated circuit (PIC) the multiplexer and the nonlinear waveguide are structurally integrated. Structural integration is to be understand as the structural integrated components are grown as part of the compact platform, the component being made of the same material as the compact platform, or the structural integrated components are bonded to the compact platform. Typically, the compact platform may be a photonic integrated circuit (PIC) made of silicon nitride (SiN).

The nonlinear waveguide typically is made of a different material, than the compact platform, and is manufactured in a separate process and afterwards bonded to the compact platform. The SiN compact platform and nonlinear material are manufactured separately. The nonlinear material is bonded with the SiN compact platform. It is now further processed to fabricate the waveguide in the nonlinear material by etching.

That the compact platform is compact is to be understood that the components are placed close to each other and are in a fixed position relative to each other so that the platform is of a minimal size. The typical size is a few millimetres in length and width. The compact platform may be as small as 0.3 cm x 0.3 cm x 0.5 cm, and preferably smaller.

The advantage of the optical system is that it comprises a compact unit, where the multiplexer and the nonlinear waveguide are placed fixed relative to each other and are using a coupler placed close to each other using evanescent coupling to transmit the single photon and the laser irradiation from the first waveguide to the nonlinear waveguide. Further, an advantage is that the multiplexer and the nonlinear waveguide are structurally integrated on the compact platform so that they are forming a compact unit, which is easy to handle and they will not be misaligned.

It is desired to convert the single photon of wavelength λₚ ≈ 930 nm to a signal in the telecom C-band (λₛ ≈ 1550nm). To satisfy energy conservation of a DFG process the laser irradiation wavelength, the second wavelength, must be λᵢ = 1 / (1/λₚ - 1/λₛ) = 2325 nm, a wavelength that can be targeted with gallium antimonide (GaSb) based tunable laser diodes or quantum cascade lasers (QCL)

The invention requires finding the right material for the nonlinear waveguide, and selecting the right laser source and multiplexer and to find the right temperature, which preferable is at room temperature, to achieve the single photon and the laser irradiation to interact in the nonlinear waveguide to make the desired frequency conversion.

WO2018/106765 use a packaged system of physically separable components. The compact platform of the current invention being a PIC is much smaller, may be as small as 0.3 cm x 0.3 cm x 0.5 cm, than the system used in WO2018/106765 A1. In one embodiment, WO2018/106765 A1 mentions the dimensions of the case to be 40 cm x 30 cm x 15 cm, which is many times larger than the current invention. According to paragraph 0036 they use PPLN waveguides which are commercially available, these waveguides are 2-5 cm, requires pulsed pump sources or very large input powers, and not optimal for heterogenous integration with other photonic components (Coupler/splitter, photodetector, sources, etc).

Regarding the article "Second-order nonlinear effects in InGaAsP waveguides for efficient wavelength conversion to the mid-infrared" by Ulsig and Volet, the article does not use single photon conversion, and the theory from the mid-infrared generation would not be adequate to design the frequency converter for single-photons due to the very small power of single photons. This in turn, implies that most of the single-photons would be lost in the process, and those few that by chance would still be left, will be depleted and if one is not careful, sum-frequency generation (SFG) will start to dominate the process. This will reverse the process by using the single-photons that have been converted to the desired wavelength, and convert them back to their original state. Therefore, the teachings of the article would not inspire to the single-photon conversion of the current invention. Furthermore, the material choices will not be transparent at the relevant pump wavelengths (In one instance 930 nm), implying that the single-photons will be lost.

The idea that single photon conversion is possible using DFG with the multiplexer and the non-linear waveguide placed on the same PIC requires the insight that it is possible to select materials and dimensions for the components, and wavelengths for which single photon conversion is possible. This insight is obtained, among other things, by the analysis in the theory section taking the number of photons into account. Further, it requires intensive testing to find the materials, dimensions and arrangement of the components to make single photon conversion possible. Further the scheme combines the nonlinear device to approximately clone the single-photons and/or can efficiently generate the strong mid-infrared sources needed for the conversion.

According to an embodiment, the multiplexer comprises a first input waveguide for receiving the single photon with a first wavelength (λₚ) and a second input waveguide for receiving the laser irradiation with a second wavelength (λᵢ). The multiplexer comprises a first and a second input waveguides, and the first and second input waveguides are made of SiN.

The multiplexer is constructed so that the single photon enters the first input waveguide and the laser irradiation enters the second input waveguide. Using input waveguides in a multiplexer fixed on a platform together with the nonlinear waveguide, with a coupling between them, is making it possible to make a compact optical system without using optical components and without risking misalignment between the multiplexer and the nonlinear waveguide when moving the optical system.

According to an embodiment, the laser irradiation and the single photon are optically combined in the first input waveguide.

In the multiplexer, the laser irradiation, or at least some of the laser irradiation passes from the second input waveguide to the first input waveguide. The laser irradiation field overlaps with both waveguides, therefore some photons will pass from the second waveguide to the first waveguide, as there will be a probability for the photon to pass to the first waveguide.

Optically combined means that both the single photon and the laser irradiation, which has passed to the first waveguide, will propagate together in the first waveguide. The distance between the first and second waveguide is important for engineering the multiplexer for transferring laser irradiation from the second waveguide to the first waveguide and keeping the single photons in the first waveguide. The gap between the first and second waveguide will typically be between 1 to 10 µm. However, the gap can also be between 200 nm and up to 100 µm. Alternatively, the gap can be as small as a few nanometers. The gap will typically be 50 to 1000 nm, but can be smaller and larger.

From the first waveguide, single photons and laser irradiation will together pass into the nonlinear waveguide, where they will interact with the material of the nonlinear waveguide, and convert the wavelength of the single photon.

The multiplexer comprises a first input waveguide, a second input waveguide and a coupler for optical transmitting the combined laser irradiation and single photons to the nonlinear waveguide. The multiplexer is arranged for combining the single photon supplied from the single-photon source and the laser irradiation generated by the laser source. The combining is done by the single photon is entering the first input waveguide and the laser irradiation is entering the second input waveguide. The input waveguides are place close to each other and depending on the distance between the two waveguides, a part of the laser irradiation is passing over into the first waveguide together with the single photons that is mainly staying in the first waveguide.

In the nonlinear waveguide, the single photons, the laser irradiation and the material of the nonlinear waveguide, are interacting by difference-frequency generation to convert the first wavelength (λₚ) of the single photon to a third wavelength (λₛ).

According to an embodiment, the multiplexer comprises a taper-like coupler for optically transmitting the combined laser irradiation and single photon to the nonlinear waveguide.

According to an embodiment, the combined laser irradiation and single photon are optically transmitted to the nonlinear waveguide by evanescent coupling.

The multiplexer comprises a coupler for optical transmitting the single photons and the laser irradiation to the nonlinear waveguide. The nonlinear waveguide may also comprise a coupler for receiving the single photons and the laser irradiation.

The coupler is preferable an extension of the first input waveguide, and may be seen as a part of the first input waveguide. Also, the nonlinear waveguide preferable comprises a coupler, which is an extension of the nonlinear waveguide.

The two couplers are placed so close together that the single photons and the laser irradiation can be optically transmitted to the nonlinear waveguide by evanescent coupling.

According to an embodiment, the multiplexer and the nonlinear waveguide are structurally integrated on a compact platform by being grown on the compact platform or bonded to the compact platform.

The multiplexer and the nonlinear waveguide are structurally integrated on the compact platform in a monolithic entity bonded or grown together, having the multiplexer and the nonlinear waveguide components manufactured into or on top of the compact platform, which is a single chip.

The waveguide may be bonded with silicon nitride (Si₃N₄). Using silicon nitride allows for standardized photonic integrated components from commercial foundries such as Ligentec, AMO and LioniX-International. To combine the single photons and a laser irradiation into the same SiN input waveguide, the standard integrated component of multiplexers is applied for evanescent coupling. This eliminates the need for free space optics, and make a more robust and compact device.

The multiplexer, the nonlinear waveguide and the coupling between the multiplexer and the nonlinear waveguide constitutes a frequency converter.

According to an embodiment, the conversion efficiency of the nonlinear waveguide is larger than 30%, preferable larger than 50%, more preferable larger than 60%, and even more preferable larger than 80%, and yet even more preferable larger than 90% by
- the nonlinear waveguide being of a material with a sufficiently high second-order optical nonlinearity,
- with a sufficiently low optical loss in the nonlinear waveguide, and/or
- with a sufficiently tight optical confinement of the nonlinear waveguide.

Conversion efficiency is the amount of energy produced as a percentage between the useful output of a frequency converter and the input. Having this efficient system, allows for using low-powered laser irradiation source in contrast to other techniques. The input power could be less than 150 mW, preferably 50 mW, more preferably 10 mW.

The nonlinear waveguide is engineered for modal birefringent phase-matching (PhM), meaning that the dimensions of the waveguide are optimized, the temperature for phase matching is optimized. In the invention, the temperature is room temperature.

The single photons at λₚ = 930 nm can become depleted because of conversion to the signal. The depletion scales with the conversion efficiency and the laser irradiation input power. A higher conversion efficiency will thus expect the device in experiencing lower noise due to a lower input power and be more energy efficient. To support this, alternative materials with a higher refractive index and larger nonlinear second-order susceptibility are used. Materials such as gallium phosphide (GaP), gallium arsenide (GaAs) and aluminum gallium arsenide (AlGaAs) all exhibits this, while being transparent at the relevant wavelengths. To further improve upon the conversion efficiency a photonic integrated circuit (PIC) allows for a compact, robust and miniature system, and has been shown to improve the nonlinear conversion due to tighter guiding of the modes, allowing for a higher conversion efficiency.

Phase-matching is the technique used in multiwave nonlinear optical processes to enhance the distance over which the coherent transfer of energy between the waves is possible.

Second-order frequency conversion usually suffers from noise caused by spontaneous Raman scattering (SRS) and spontaneous parametric down conversion (SPDC). SRS noise is proportional to the temperature of the nonlinear crystal. The phase-matching however is often adjusted by changing the temperature, thereby being a source of noise. The SPDC is proportional to the optical power, and can be lowered by using a laser irradiation with wavelength above the generated signal.

The nonlinear waveguide is engineered for phase-matching, meaning that the dimensions of the waveguide are optimized, the temperature for phase-matching is optimized. In the invention, the preferred temperature is room temperature. Also, the materials around the nonlinear waveguide are optimized for phase matching, usually the nonlinear waveguide it surrounded by a silica (SiO₂) cladding, and/or sometimes a thin SiN passivation layer. Also, the nonlinear waveguide is optimized by selecting the waveguide from materials suitable for the applied wavelengths. Also, optimizing the specific laser irradiation modes coupled into the nonlinear waveguide. All these parameters a skilled person in optics would know how to optimize.

According to an embodiment, the second-order optical nonlinearity of the nonlinear waveguide material is larger than 1 pm/V, preferably 50 pm/V, more preferably 100 pm/V.

According to an embodiment, the optical loss in the nonlinear waveguide is less than 10 dB/cm, preferably 5 dB/cm, more preferably 1 dB/cm.

According to an embodiment, the optical confinement is related to an effective modal area smaller than 20 µm², preferably smaller than 10 µm², and more preferably smaller than 2 µm².

To achieve the high conversion efficiency, the optical nonlinearity, the optical loss, and the optical confinement are optimized so as to together the three parameters ensures the high conversion efficiency in the nonlinear waveguide.

According to an embodiment, the input power for the laser source is less than 150 mW, preferably less than 50 mW, more preferably less than 10 mW.

Having a high conversion efficiency allows for using less input power for the laser source saving energy.

According to an embodiment, the length of the nonlinear waveguide, where the conversion takes place, is shorter than 6 mm, more preferable shorter than 4 mm, and even more preferable shorter than 2 mm.

A short length of the nonlinear waveguide allows for a more compact system, with a higher fabrication tolerance. These short waveguides are only possible due to the very efficient frequency conversion, allowing to convert the photons with both short waveguides and low input power.

According to an embodiment, the third wavelength (λₛ) of the single photon is changed by tuning the second wavelength (λᵢ).

By tuning the second wavelength (λᵢ), which is the wavelength of the laser irradiation, the conversion of the single-photon wavelength from the first wavelength of the single photon (λₚ) to the third wavelength (λₛ). This is done by the angular frequency equation ωₛ = ωₚ - ωᵢ, or in wavelength terms 1/λₛ = 1/λₚ - 1/λᵢ.

According to an embodiment, the nonlinear waveguide is fabricated in III-V semiconductor materials with large second-order nonlinear optical susceptibility, preferable the nonlinear waveguide is fabricated in or based on GaP, GaAs and/or AlGaAS.

In this invention alternative second-order nonlinear materials are used for the nonlinear waveguide to increase the conversion efficiency in a waveguide compared to what is known from prior art.

The nonlinear waveguide is fabricated in III-V semiconductor materials, like for instance GaP, GaAs, AlGaAs or other binary, tertiary or quaternary etc. III-V semiconductor materials, with second-order nonlinear optical susceptibility. According to an embodiment, the input waveguides in the multiplexer comprises silicon nitride (SiN), aluminum nitride (AIN), tantalum pentoxide (Ta₂O₅), and/or hafnium pentoxide (HfOs).

The multiplexer is preferable made of the same material as the compact platform. The material typically will be silicon nitride (SiN), but other materials can also be applied, for instance aluminum nitride (AIN) and/or hafnium pentoxide (HfOs). The materials are transparent for all three wavelengths involved.

According to an embodiment, the laser source is structurally integrated on the compact platform.

In addition, the laser source may be structurally integrated on the compact platform, for instance by bonding. The laser source may preferably be a laser diode. Other lasers can also be used, especially if the laser source is placed externally. However, due to the small size of a laser diode, it may be structurally integrated on the compact platform, where the laser diode, may be bonded to the compact platform or otherwise fixed, so it is integrated in the platform, and not will be misaligned when handling the platform.

According to an embodiment, the compact platform is a photonic integrated circuit (PIC).

Preferably, the compact platform is a photonic integrated circuit (PIC). The photonic integrated circuit (PIC) is typically SiN based.

According to an embodiment, the photonic integrated circuit (PIC) compact platform is SiN based.

The nonlinear waveguide is bonded to the SiN based photonic integrated circuit (PIC) compact platform.

According to an embodiment, the optical system comprises a linear resonator, the linear resonator comprises two wavelength selective, highly reflective sections, and the nonlinear waveguide.

The linear resonator is a nonlinear waveguide with two wavelength selective, and highly reflective sections, basically mirrors, placed at both ends of the nonlinear waveguide. The advantage is that the linear resonator can be used both as a filter of unwanted wavelengths in the output and as an enhancement of the frequency conversion. The first reflective section allows single photons and laser irradiation to pass into the nonlinear waveguide, the second reflective section only allows some photons, ideally only the converted single photons, to leave the nonlinear waveguide. Otherwise, single photons and laser irradiation are reflected so the photons and irradiation can move back and forth in the nonlinear waveguide several times enhancing the frequency conversion. The advantage of the linear resonator is that either more single photons are converted or a lower input power is required.

According to an embodiment there is a filter after the nonlinear waveguide, the filter may be a ring resonator.

A ring resonator is placed after the nonlinear waveguide and the ring resonator works as a filter placed to remove photons and radiation with unwanted wavelengths, so only the single photons with the wanted frequency pass through the ring resonator and outputted as the single photon.

According to an embodiment, the optical system comprises a ring resonator; the multiplexer and the nonlinear waveguide may be integrated as or with the ring resonator.

The optical system comprises a ring resonator. The ring resonator may form a multiplexer together with the first input waveguide and/or the second input waveguide. From the first input waveguide, the single photon passes into the ring resonator, and from the second input waveguide, the laser irradiation passes into the ring resonator. The ring resonator itself may work as a nonlinear waveguide converting the single photon of the first wavelength to the third wavelength. Eventually the converted single photon leaves the ring resonator as the output single photon.

According to an embodiment, the optical system comprises two or more nonlinear waveguides; the output signal generated in one nonlinear waveguide is one of the input signals to the next nonlinear waveguides, and the single photon generated in the last nonlinear waveguide is the output single photon with the third wavelength λₛ.

There may be two or more nonlinear waveguides on the PIC. The output signal for one nonlinear waveguide is then input to the next nonlinear waveguide.

The last of the nonlinear waveguides outputs the single photon with the third wavelength λₛ. The last of the nonlinear waveguides may output two single photon with the third wavelength λₛ. The last nonlinear waveguide may also output single photons with another wavelength λₛ₂.

The single photon with a first wavelength λₚ is supplied from a single photon source. This single photon may be supplied to any of the nonlinear waveguides. There may be several laser sources of irradiation.

The first waveguide may be receiving a single photon with a first wavelength from a single photon source and laser irradiation with a second wavelength from a laser source.

Alternatively, the first waveguide may be receiving laser irradiation with a second wavelength from a laser source and laser irradiation with a fourth wavelength from another laser source. The output from the first waveguide are then laser irradiation with a fifth wavelength as input for the next waveguide. In a possible last waveguide, the single photon with a first wavelength from the single photon source is received by the waveguide, together with the laser irradiation from the previous waveguide, and they interact to convert the wavelength of the single photon.

The last of the nonlinear waveguides either receives the single photon from a single photon source and an idler signal from the previous nonlinear waveguide, alternatively the last nonlinear waveguide receives a laser irradiation from a laser source and a single photon from the previous nonlinear waveguide.

The advantage is that the wavelength, of the irradiation or single photon, received from the previous nonlinear waveguide may be generated in several steps, and thereby the wavelength may be adjustable to wavelengths, which may not be generated by the laser source or the single photon source directly. Also, this setup may be used to approximately clone the single photon, so more single photons are present, there may be two single photons of the same frequency as the input single photon and a single photon of another frequency as the input single photon.

The waveguides may be a linear waveguides, with or without reflective sections or mirrors for resonating, or ring resonators.

According to an embodiment, the optical system generates a continues beam of mid-infrared or visible irradiation.

The optical system generates a continuous beam of mid-infrared (2-12 µm) irradiation when DFG is used, or visible irradiation when SFG is used.

Besides generating single-photons, the optical system may also generate a continouos beam of mid-infrared or visible irradiation. This may be done simultaneous with generating single photons, but it is also possible to turn off the single photon source and use the optical system for mid-infrared or visible irradiation generation.

In a second aspect, the invention relates to a method for frequency conversion of a single photon in an optical system by difference-frequency generation (DFG), wherein the optical system comprising
- a single-photon source for supplying a single photon with a first wavelength (λₚ),
- a laser source for generating laser irradiation with a second wavelength (λᵢ),
- a multiplexer, being arranged for combining and coupling the single photon and the laser irradiation, and
- a nonlinear waveguide, comprising a second-order nonlinear optical susceptibility material for frequency conversion of the single photon,

wherein the multiplexer and the nonlinear waveguide are structurally integrated on a compact platform, the compact platform is a photonic integrated circuit (PIC),
the method comprises the steps:
   - supplying a single photon with a wavelength λₚ by the single-photon source,
   - generating laser irradiation with a wavelength λᵢ by a laser source,
   - optically combining the laser irradiation and the single photon in the multiplexer,
   - transmitting the combined laser irradiation and single photon from the multiplexer to the nonlinear waveguide, which is optically connected to the multiplexer,
   - converting, in the nonlinear waveguide, by difference-frequency generation the single photon by optically interacting with the laser irradiation and the waveguide material, so as to frequency convert the single photon from the first wavelength (λₚ) to a third wavelength (λₛ).

In a third aspect, the invention relates to a frequency converter for frequency conversion of a first wavelength (λₚ) of a single photon by difference-frequency generation (DFG), wherein the frequency converter comprising
- means for receiving a single photon with a first wavelength (λₚ),
- means for receiving laser irradiation with a second wavelength (λᵢ),
- a multiplexer, being arranged for combining and coupling the single photon and the laser irradiation, and
- a nonlinear waveguide, comprising a second-order nonlinear optical susceptibility material for frequency conversion of the single photon,
wherein the multiplexer and the nonlinear waveguide are structurally integrated on a compact platform, the compact platform is a photonic integrated circuit(PIC), the multiplexer optically combines the laser irradiation and the single photon, and optically transmits the combined laser irradiation and single photon to the nonlinear waveguide, which is optically connected to the multiplexer, for frequency conversion of the single photon in the nonlinear waveguide by difference-frequency generation by optically interacting with the laser irradiation and the waveguide material, so as to frequency convert the single photon from the first wavelength (λₚ) to a third wavelength (λₛ).

This aspect is for a frequency converter, which is the part of the optical system claimed in claim 1. The frequency converter comprises the first waveguide, the second waveguide, and the nonlinear waveguide, which all are structurally integrated in the compact platform. The means for receiving the single photon and the laser irradiation is that the single photon and the laser irradiation enters the first waveguide and the second waveguide respectively. This may for instance be done by optical fibers connected to the waveguides.

The advantage of the frequency converter is that it is a compact unit, where the multiplexer and the nonlinear waveguide are placed fixed relative to each other and are using a coupler, for instance tapered ends of the first waveguide and the nonlinear waveguide placed close to each other using evanescent coupling to transmit the single photon and the laser irradiation from the first waveguide to the nonlinear waveguide. Further, an advantage is that the multiplexer and the nonlinear waveguide are structurally integrated on the compact platform so that they are forming a compact unit, which is easy to handle, they will not be misaligned and be more reproducible.

The first, second and third aspect of the present invention may each be combined with any of the other aspects. These and other aspects of the invention will be apparent from and elucidated with reference to the embodiments described hereinafter.

### BRIEF DESCRIPTION OF THE FIGURES

The optical system according to the invention will now be described in more detail with regard to the accompanying figures. The figures show one way of implementing the present invention and is not to be construed as being limiting to other possible embodiments falling within the scope of the attached claim set.
Fig. 1 illustrates the optical system comprising a compact platform.
Fig. 2 illustrates a second embodiment of the optical system comprising a compact platform.
Fig. 3 illustrates a third embodiment of the optical system comprising a compact platform.
Fig. 4 and 5 illustrate the multiplexer, which comprises two input waveguides.
Fig. 6 and 7 illustrate the nonlinear waveguide.
Fig. 8 illustrates an embodiment where the compact platform comprises a Peltier element.
Fig. 9 illustrates the nonlinear waveguide, with polarisation of the single photon and the laser irradiation.
Fig. 10 illustrates interaction of optical waves in the second-order nonlinear waveguide.
Fig. 11 illustrates a schematic of the nonlinear waveguide and fundamental mode profiles.
Fig. 12 illustrates the coupling length for the laser irradiation at different gap sizes and crosstalk for the single photon at different gaps.
Fig. 13 illustrates an embodiment where the nonlinear waveguide is part of a resonator.
Fig. 14 illustrates an embodiment where a ring resonator is used as a filter.
Fig. 15 illustrates an embodiment where the nonlinear waveguide comprises a ring-resonator.
Fig. 16 illustrates an embodiment where the nonlinear waveguide comprises a ring-resonator and the single photon and the laser irradiations enters in opposite directions.
Fig. 17 illustrates an embodiment with two nonlinear waveguides.
Fig. 18 illustrates a further embodiment with two nonlinear waveguides.
Fig. 19 shows an embodiment, where there is no single photon entering the second-order nonlinear waveguide.

### DETAILED DESCRIPTION OF AN EMBODIMENT

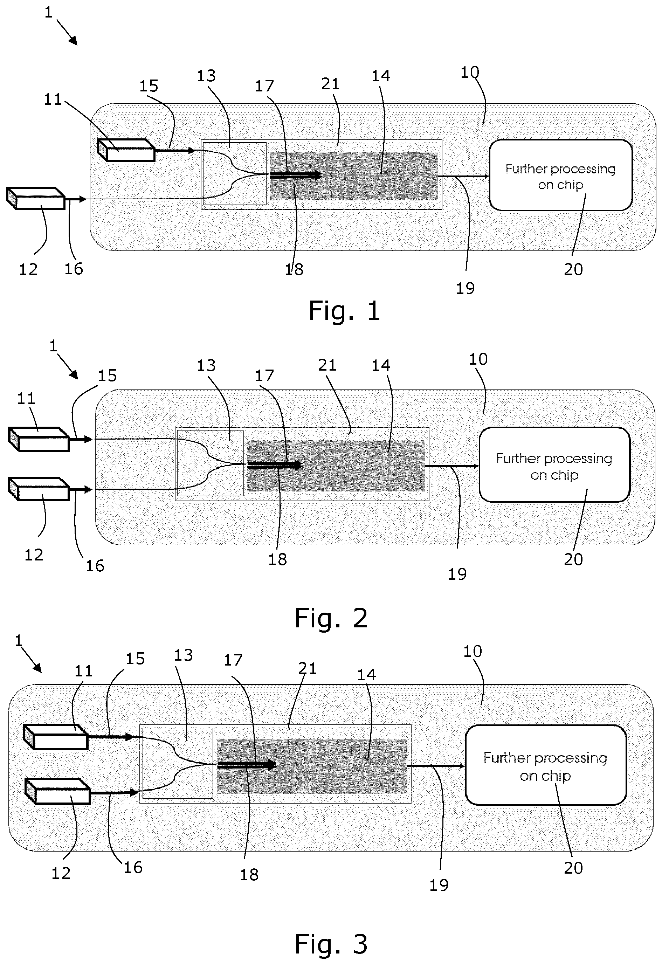

Fig. 1 illustrates the optical system 1 comprising a compact platform 10, which may be a photonic integrated circuit (PIC), where the laser source 11 is integrated on the platform, while the single-photon source 12 is placed external. The irradiation 15 from the laser source and the single photon 16 from the single-photon source 12 is passing through the multiplexer 13, which is combining the laser irradiation 15 and the single photon 16. From the multiplexer 13 the combined laser irradiation 17 and single photon 18 enters the nonlinear waveguide 14, where the frequency of the single photon 18 is converted to the third wavelength 1550 nm. The single photon with the third wavelength 19 is transmitted out of the nonlinear waveguide where it may continue for further processing on the PIC 20 or it may be transmitted out of the compact platform 10, to be used for it purpose, for instance for long-range quantum telecommunication.

The multiplexer 13 and the nonlinear waveguide 14 constitutes a frequency converter 21. It is in the frequency converter that the single photon and the laser irradiation is combined, and the single-photon frequency is converted from a first wavelength to the third wavelength.

Fig. 2 illustrates an alternative embodiment of the optical system 1, where both the laser source 11 and the single-photon source 12 are placed external.

Fig. 3 illustrates yet another alternative embodiment of the optical system 1, where both the laser source 11 and the single-photon source 12 are placed integrated on the compact platform 10. Otherwise, the process in the embodiment of fig. 2 and the embodiment of fig. 3 is the same as the process in the embodiment of fig. 1, and therefore not further described here.

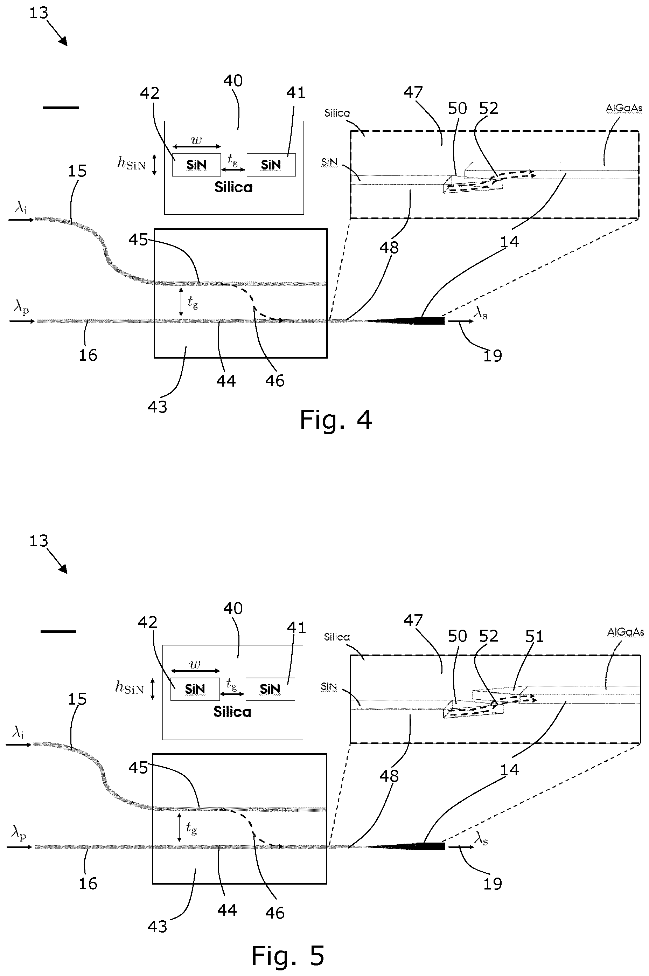

Fig. 4 illustrates the multiplexer 13, which comprises two input waveguides 41, 42 and a coupler 48 for optical transmitting. The multiplexer comprises a combining section 40, 43. In fig. 4, the combining section is shown twice, it is seen from the side in the box marked 43 and from the end in the box marked 40, that shows a vertical cross section. The first input waveguide 41 receives the single photon 16 with a wavelength λₚ, at reference 44, the first waveguide, in Fig. 4, and the second input waveguide 42 receives the laser irradiation 15 with a wavelength λᵢ, at reference 45, the second waveguide, in Fig. 4. Between the two input waveguides is a distance t_{g}, in the combining section of the multiplexer 13, at least part of the laser irradiation is transmitted 46 from the second input waveguide 42, 45 to the first input waveguide 41, 44 by quantum effects, which is evanescent coupling, so the first input waveguide now contains both part of the laser irradiation and the single photon. The first input waveguide comprises a coupler 48 for transmitting the combined laser irradiation and single photon, the coupler may comprise a tapered section 50 from where the single photon and the laser irradiation 52 passes over into the nonlinear waveguide 14.

Fig. 5 illustrates another embodiment of the multiplexer 13, where Fig. 5 is identical to Fig. 4 except in Fig. 5 also the nonlinear waveguide 14 comprises a tapered section 51 into which the laser irradiation and the single photon passes 52 from the tapered section 50 of the second input waveguide. Otherwise, Fig. 5 is identical to Fig. 4, and therefore not further described here.

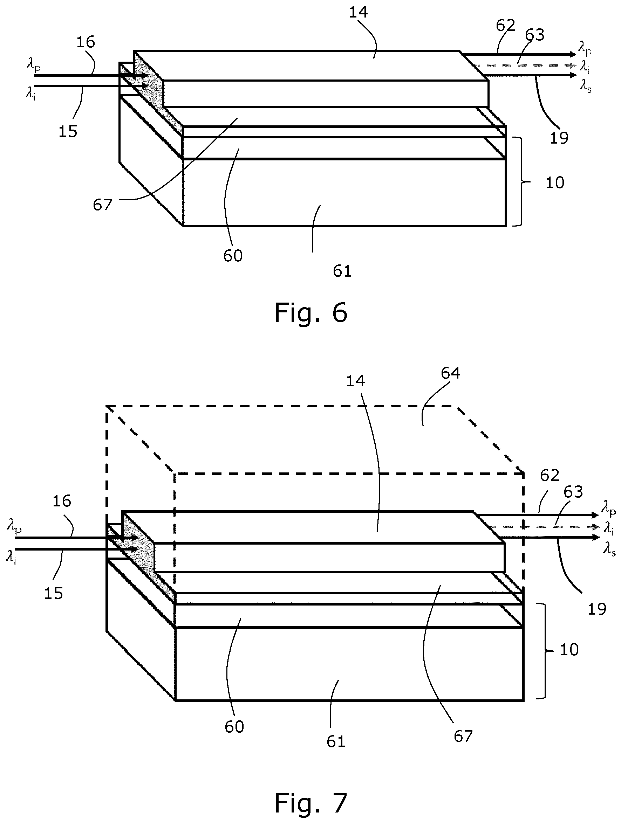

Fig. 6 illustrates the nonlinear waveguide 14 made of GaAs or AlGaAs placed on top of a photonic integrated circuit (PIC), which forms the compact platform 10. The compact platform 10 comprises a layer of silica on silicon substrate 61 and a layer of Silicon Nitride (SiN) 60 to which the nonlinear waveguide is bonded. The nonlinear waveguide 14 may be edged out of a piece of GaAs or AlGaAs, and there may be left a film 67 in the same material as the nonlinear waveguide 14 in connection with the waveguide, between the SiN layer 60 and the nonlinear waveguide 14. The single photon 16 with the first wavelength λₚ and the laser irradiation 15 with the second wavelength λᵢ enters the nonlinear waveguide 14 in one end and the converted single photon 19 with the third wavelength λₛ leaves the nonlinear waveguide 14 at the other end.

Also excess photons 62 and excess irradiation 63 of other wavelengths than the third wavelength may leave the nonlinear waveguide 14. These frequencies may be removed, for instance by a filter in the further processing on the chip 20 (see fig. 1).

Fig. 7 illustrates that a cladding, typically made of silica, is covering the nonlinear waveguide of fig. 6. Otherwise, Fig. 7 is identical to Fig. 6, and therefore not further described here.

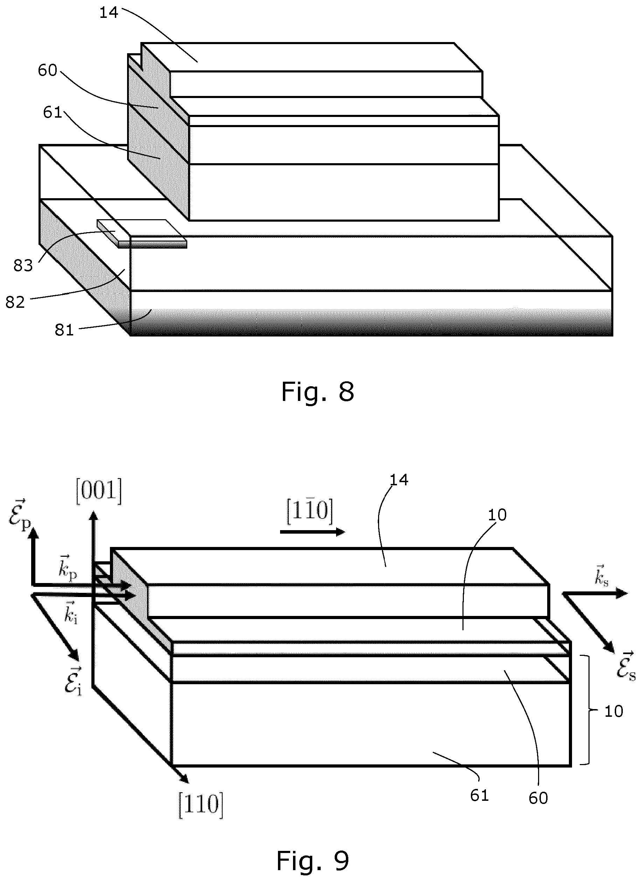

Fig. 8 illustrates an embodiment, where the compact platform comprises a Peltier element 81, a layer of heat conducting material 82 and a thermistor 83. The nonlinear waveguide 14 is integrated on the SiN layer 60, and fabricated on a silicon substrate 61, sits on the heat-conducting material 82. The Peltier element and the thermistor is used to regulate the temperature of the nonlinear waveguide 14. Hereby the nonlinear waveguide 14 can be tuned to change the properties of the material changing the third wavelength of the single photon leaving the nonlinear waveguide 14.

Fig. 9 to 12 are relevant according to the below descriptions of theory and the nonlinear waveguide and the multiplexer.

Fig. 9 illustrates the nonlinear waveguide 14. It shows a schematic of the nonlinear waveguide, made of GaAs or AlGaAs. The single photon and the laser irradiation have orthogonal polarizations and propagate along [110]. The signal is polarized along [110] as described in the theory section below.

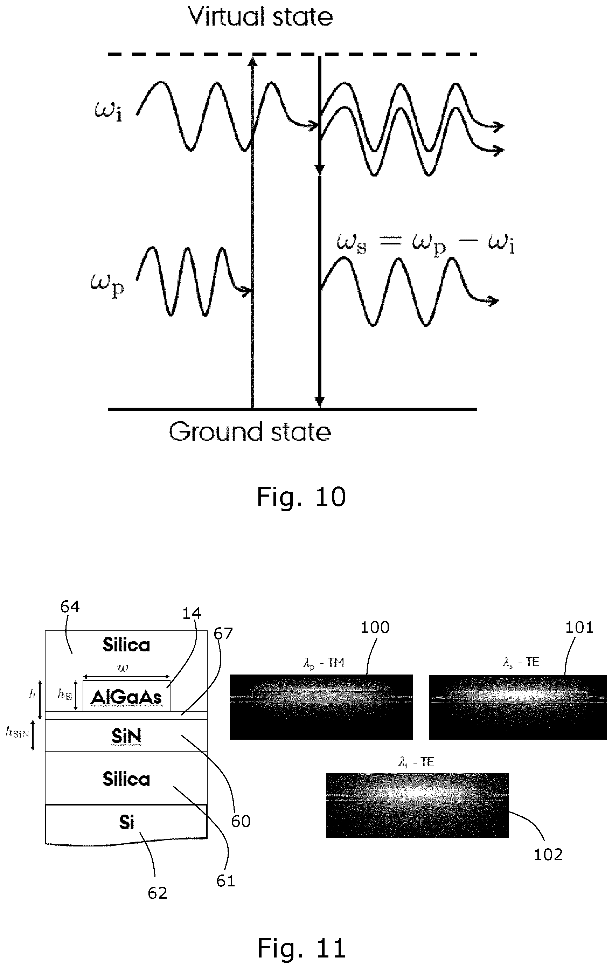

Fig. 10 illustrates a schematic of difference-frequency generation (DFG) that may occur when three optical waves interact in a second-order nonlinear material. Curved arrows represent single photons, whereas strait arrows represent transitions between states as described in the theory section below.

Fig. 11 illustrates a schematic of the nonlinear waveguide 14 and relevant fundamental mode profiles as described in the nonlinear waveguide section below. Three fundamental modes 100, 101, 102 are shown for respectively the single photon with the first wavelength (λₚ) 100, the resulting single photon with the third wavelength (λₛ) 101, and the laser irradiation with the second wavelength (λᵢ) 102.

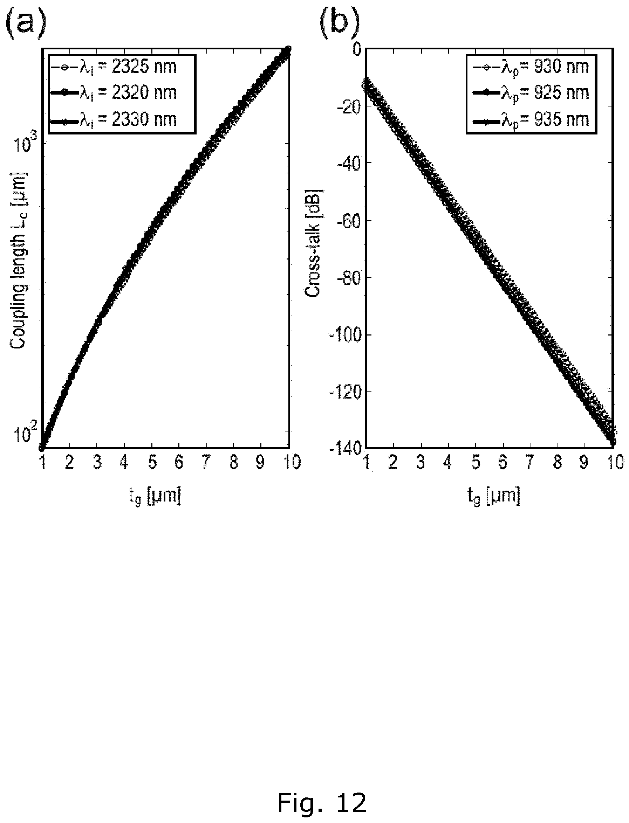

Fig. 12 illustrates in (a) the coupling length for the laser irradiation at different gap sizes, and (b) the cross-talk for the single photon at different gaps. The main point is that a small change in the second wavelength λᵢ and the first wavelength (λₚ) does not make much difference, as the curves are almost plotted on top of each other. Further description of fig. 12 in the sections below.

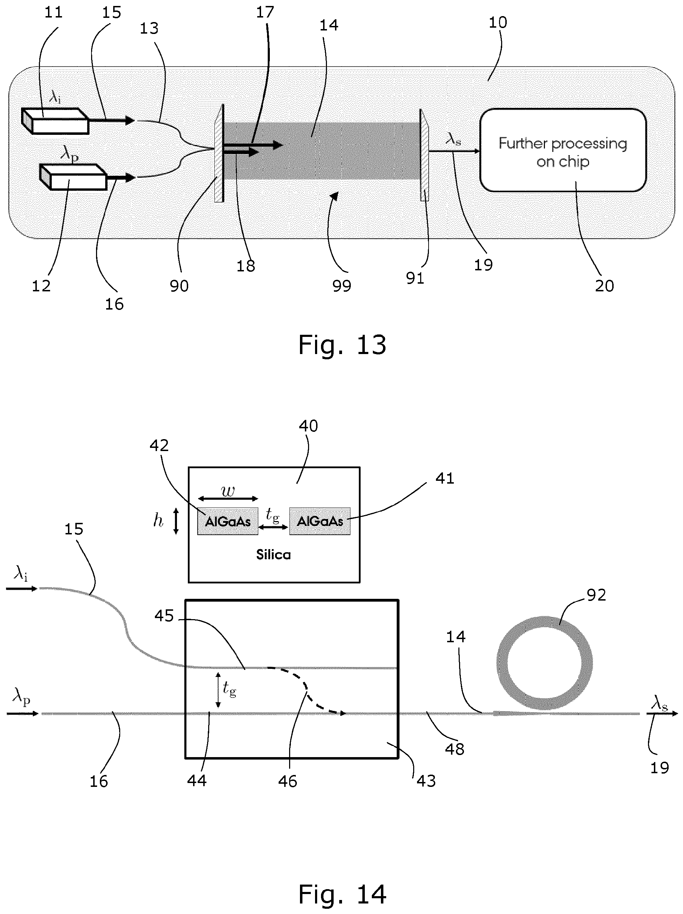

Fig. 13 illustrates an embodiment, where the nonlinear waveguide 14 is part of a linear resonator 99. The linear resonator comprises two highly reflective sections, that will be referred to as mirrors for simplicity, 90, 91 on each side of the nonlinear waveguide 14. The first mirror 90 allows single photons 16 and laser irradiation 15 to pass into 17, 18 the nonlinear waveguide 14, the second mirror 91 only allows some photons, ideally only the converted single photons 19, to leave the nonlinear waveguide. Otherwise, single photons and laser irradiation are reflected so the photons and irradiation can move back and forth in the nonlinear waveguide several times enhancing the frequency conversion.

Fig. 13 differs from Fig. 3 in that the nonlinear waveguide 14 is part of a linear resonator, where mirrors 90, 91 is added to the nonlinear waveguide. Otherwise, the setup is the same as in fig. 3, and is therefore not further described here.

Fig. 14 illustrates an embodiment, where a ring resonator 92 is used as a filter placed after the nonlinear waveguide 14 to filter out photons and irradiation with unwanted wavelengths, so only the single photons with the wanted frequency are passing through the ring resonator and outputted as the single photon 19.

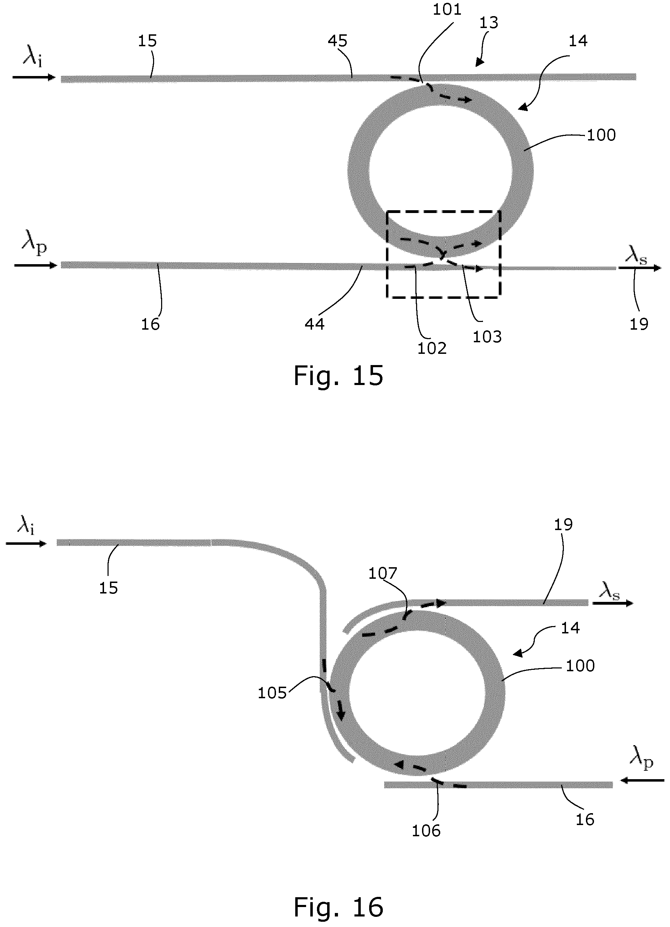

Fig. 15 illustrates an embodiment, where the multiplexer and the nonlinear waveguide 14 are combined in a ring resonator 100. The single photon 16 with the first wavelength λₚ is transmitted at the arrow 102 into the ring resonator 100 from the first waveguide 44. The laser irradiation 15 with the second wavelength λᵢ is transmitted at the arrow 101 into the ring resonator 100. The ring resonator 100 and the second waveguide 45 here constitutes the multiplexer 13. The laser irradiation and the single photon move around in the ring resonator 100. In fig. 15 the laser irradiation 15 and the single photon 16 moves in opposite directions, however it will also work if they move in the same direction. The ring resonator 100 constitutes the nonlinear waveguide 14. In the ring resonator, the irradiation and the single photon can take several turns around in the ring resonator 100 before the single photon converts from the first frequency λₚ to the third frequency λₛ enhancing the conversion efficiency. Eventually the converted single photon 19 with the third wavelength λₛ leaves the ring resonator at the arrow 103.

Fig. 16 illustrates another embodiment using a ring resonator in the nonlinear waveguide. The single photon 16 with the first wavelength λₚ enters the ring resonator 100, which is the nonlinear waveguide 14, at the arrow 106, and the laser irradiation 15 with the second wavelength λᵢ enters the ring resonator 100 in the nonlinear waveguide 14 at the arrow 105, so that the laser irradiation and the single photon moves around in the ring resonator. The converted single photon 19 with the third wavelength λₛ leaves the ring resonator at the arrow 107.

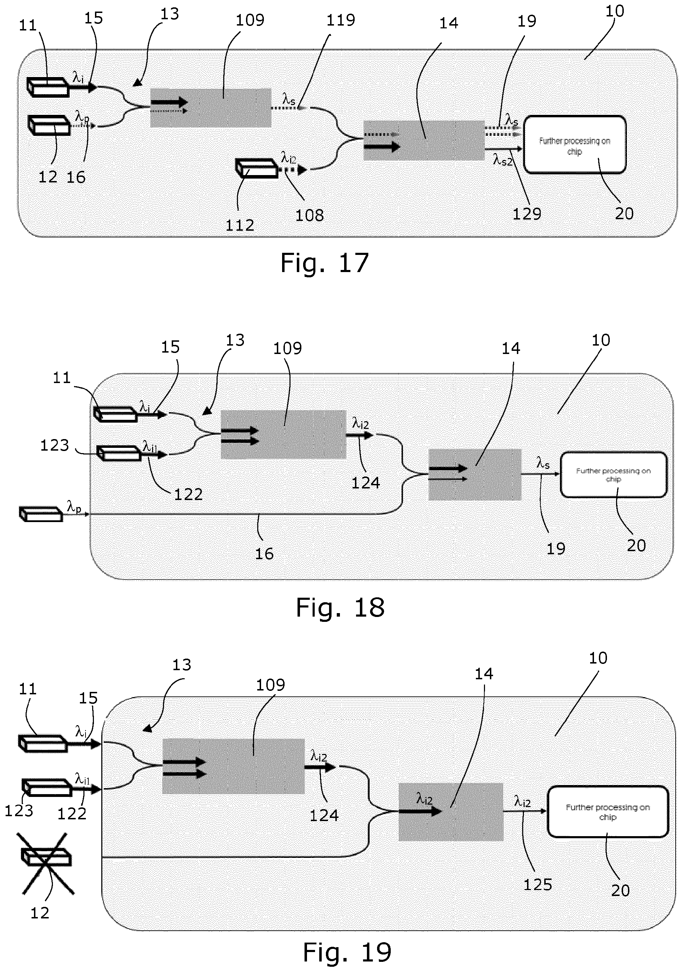

Fig. 17 illustrates an embodiment with two non-linear waveguides 14, 109. The first non-linear waveguide 109 is converting the single photon 16 from a wavelength λₚ to a single photon 119 with a wavelength λₛ. The single photon 119 with a wavelength λₛ then pass into the second nonlinear waveguide 14, where the single photon is approximately cloned into two single photons 19 with the same wavelength λₛ and further generates a single photon 129 with a wavelength λₛ₂. In the first nonlinear waveguide 109, the single photon 16 with a wavelength λₚ interacts with a laser irradiation 15 with the wavelength λᵢ, and in the second nonlinear waveguide 14 the single photon with the wavelength λₛ₁ interacts with a laser irradiation 108 from a second laser source 112 with a wavelength λᵢ₂.

In an example, the single photon 16 may have a wavelength λₚ of approximately 930 nm, the laser irradiation 15 may have a wavelength λᵢ of approximately 581 nm. Then the single photon 119 may have a wavelength λₛ of approximately 1550 nm. This single photon interacts in the second-order nonlinear waveguide 14 with the laser irradiation 108 from a second laser source 112 with a wavelength λᵢ₂ of 930 nm and this results in an output of a single photon 129 of 2325 nm and two single photons 19 with a wavelength of λₛ of 1550 nm and one single photon with a wavelength of 2325 nm. In this case the converted single photon with a wavelength of 2325 nm, may be filtered out and only the approximately cloned single photons of 1550 nm may be used, and the advantage of using a second nonlinear waveguide is that more single photons at the required frequency is generated by the cloning.

Fig. 18 illustrates an embodiment with two nonlinear waveguides 14, 109. The first nonlinear waveguide 109 receives laser irradiation 15 with a wavelength λᵢ from a laser source 11 and an idler signal 122 with a wavelength λᵢ₁ form another laser source 123. The laser irradiation is converted to an idler signal 124 with a wavelength λᵢ₂. This frequency conversion is obtained either by DFG or by SFG. The second nonlinear waveguide 14 receives the idler signal 124 generated in the first nonlinear waveguide 109 and a single photon 16 with a wavelength λₚ from the single photon source 12. In the second nonlinear waveguide 14, the single photon 16 interacts with the idler signal 124 and converts to a single photon 19 with a wavelength λₛ.

In an example the laser irradiation 15 may have a wavelength λᵢ of 1550 nm, the idler signal 122 may have a wavelength λᵢ₁ of 930 nm. The idler signal 124 generated by the first nonlinear waveguide 109 then have a wavelength λᵢ₂ of 2325 nm (if DFG is used, or 581 nm if SFG is used). The single photon 16 has a wavelength λₚ of 930 nm. In the second nonlinear waveguide 14 the single photon is then converted to a single photon 19 with a wavelength λₛ of 1550 nm. Here by single photons of the wavelength 930 nm may also be created by approximate cloning. These may be filtered out under further processing 20.

From a nonlinear waveguide 14, 109 also most of the laser irradiation input 15, 122 passes through and out of the nonlinear waveguides. These laser irradiation output may be filtered away in the further processing and are not shown in fig. 17 and 18. However, it is possible to use these outputs where they are not filtered away.

Fig. 19 shows an embodiment, where there is no single photon entering the second-order nonlinear waveguide 14 and where the idler 124 is not filtered away. In this case, the system functions as an efficient mid-infrared or visible irradiation generating device.

The single photons may be generated in discrete time steps, and then there may be a period between the single photons where there is no single photons generated. It is also possible to turn off the single photon generation and use the compact platform 10 as a mid-infrared or visible irradiation generating device, generating a continuous beam of light.

### Theory

A theoretical approach of conversion efficiency in perfectly phase-matched waveguides with no loss:
The theory behind the invention is presented in this section. In this section, AlGaAs is used for the nonlinear waveguide, but also GaAs or GaP can be used as well as other III-V semiconductor materials that has a high second order susceptibility.

AlGaAs is a crystal of cubic class belonging to the point group "zinc blende". It is not centrosymmetric, which allows for second-order optical nonlinearity. For achieving efficient nonlinear frequency conversion through the second-order nonlinearity, phase-matching (PhM) must occur. Cubic crystals are isotropic, and birefringent PhM cannot occur in bulk. However, a waveguide structure changes the symmetry and induces form birefringence. This allows for wavelength conversion via modal PhM. The complex electric polarization is given by: $\vec{P} = {ε}_{0} χ \vec{E} + {\vec{P}}^{\left(2\right)}$ (1) where ε₀ is the vacuum permittivity, χ is the linear electric susceptibility and 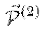 accounts for the presence of optical nonlinearities. This last term is described by: 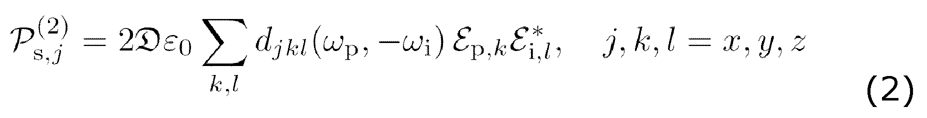 where the degeneracy factor 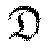 is equal to the number of permutations of the angular frequencies ωₚ and ωᵢ. In the present case where ωᵢ ≠ ωₚ, the degeneracy factor 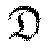 is = 2.The nonlinear tensor depends on the crystal point group. For zinc blende and assuming Kleinman's symmetry, it reads $d = \left(\begin{matrix}0 & 0 & 0 & {d}_{14} & 0 & 0 \\ 0 & 0 & 0 & 0 & {d}_{14} & 0 \\ 0 & 0 & 0 & 0 & 0 & {d}_{14}\end{matrix}\right) ,$ (3)

Eq. (2) is now rewritten in vector form: ${{\vec{P}}_{s}}^{\left(2\right)} = 4 {ε}_{0} d \vec{υ} ,$ (4) where *̅υ̅*̅ in the case of DFG is given by: $\vec{υ} = {\left(\begin{matrix}{E}_{p , x} {E}_{i , x}^{*} {E}_{p , y} {E}_{i , y}^{*} {E}_{p , z} {E}_{i , z}^{*} {E}_{p , y} {E}_{i , z}^{*} + {E}_{p , z} {E}_{i , y}^{*} … \\ {E}_{p , x} {E}_{i , z}^{*} + {E}_{p , z} {E}_{i , x}^{*} {E}_{p , x} {E}_{i , y}^{*} + {E}_{p , y} {E}_{i , x}^{*}\end{matrix}\right)}^{T} .$ (5)

To reveal the allowed polarization for the signal and its amplitude, the product of Eq. (3) and Eq. (5) is computed: $d \vec{v} = {d}_{14} \left(\begin{matrix}{E}_{p , y} {E}_{i , z}^{∗} + {E}_{p , z} {E}_{i , y}^{∗} \\ {E}_{p , x} {E}_{i , z}^{∗} + {E}_{p , z} {E}_{i , x}^{∗} \\ {E}_{p , y} {E}_{i , y}^{∗} + {E}_{p , y} {E}_{i , x}^{∗}\end{matrix}\right) .$ (6)

To have a non-zero vector the incoming beams are required to be orthogonal. This is also known as type-II PhM. Materials often show a larger refractive index at lower wavelengths, this is also the case for AlGaAs at the desired wavelengths. It has proven easier to obtain PhM by modal birefringence when transverse-magnetic (TM) mode polarization is along [001]. This implies that the AlGaAs orientation should be rotated 45°. A schematic of the nonlinear waveguide and its orientation is available in fig. 9.

The direction of propagation is along [110]. The laser and the signal are transverse-electromagnetic (TE) modes, and linearly polarized along [110]. The single-photon source (also called single-photon pump) is a (TM) mode, and polarized along [001]. The polarization of the signal is found under the conditions ε_{p,z} = εₚ and ε_{i,y} = ε_{i,x} = εᵢ/√2 and eq.(5), eq.(3) into eq.(4): ${{\vec{P}}_{s}}^{\left(2\right)} = 4 {ε}_{0} {d}_{14} \frac{{E}_{p} {E}_{i}^{*}}{\sqrt{2}} \left(\begin{matrix}1 \\ 1 \\ 0\end{matrix}\right) .$ (7)

Resulting in d_{eff} = d₁₄ when the pump fields are linear polarized and in the generated signal wave being TE polarized. This gives rise to the wavenumber mismatch: $\begin{matrix}Δ β & ≡ {β}_{p} - {β}_{i} - {β}_{s} \\ & = 2 π \left(\frac{{n}_{TM} \left({λ}_{{}_{p}}\right)}{{λ}_{{}_{p}}}-\frac{{n}_{TE} \left({λ}_{{}_{i}}\right)}{{λ}_{i}}-\frac{{n}_{TE} \left({λ}_{s}\right)}{{λ}_{s}}\right) .\end{matrix}$ (8)

Where *β* is the real part of the propagation constant, *n* is the effective refractive index of the relevant optical mode. To obtain efficient conversion efficiency, perfect PhM is required which is obtained when Δ*β* = 0. For the complex electric field, the following Ansatz is used: ${\vec{E}}_{ν} \left(\vec{r}, t\right) = {\vec{A}}_{ν} \left(r, t\right) {e}^{{ik}_{ν} z} {e}^{- {iω}_{ν} t}$ (9) ${\vec{A}}_{ν} \left(\vec{r}, t\right) = {Z}_{ν} \left(z, t\right) {\vec{E}}_{t , ν} \left(x, y\right)$ (10) ${Z}_{ν} = \left|{Z}_{ν}\right| {e}^{{iϕ}_{ν}}$ (11) where k is the propagation constant *z* = [11̅0] is the direction of propagation and the complex amplitude 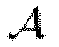 is assumed to vary slowly along z. *ϕ* is the phase of the laser and the complex amplitude 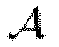 is further split into its transverse field components *̅ε̅*̅_{t,*v*}(*x*, *y*) and its slowly varying amplitude 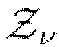 (*z*, *t*). By combining eq. 7 and eq. 9, the second order nonlinear polarization gives rise to four different frequency components. Usually only one of these components may have an appreciable intensity, due to certain PhM that governs the conversion efficiency. The DFG term is considered here, where the other are negligible under PhM: $\begin{matrix}{{P}_{s}}^{\left(2\right)} & = 4 {ε}_{0} {d}_{eff} {E}_{p} {E}_{i}^{*} \\ & = 4 {ε}_{0} {d}_{eff} {A}_{p} {A}_{i}^{*} {e}^{i \left({k}_{p}-{k}_{i}\right) z} {e}^{- i \left({ω}_{p}-{ω}_{i}\right) t}\end{matrix}$ (12)

To obtain the DFG the single photon, the laser irradiation, and a signal beam are sent through a material with second-order susceptibility, as can be seen in Fig. 10. The signal beam will not be actively sent in, but will be present in the form of virtual photons or due to blackbody radiation. The nonlinear phenomena is an interaction between light and matter. The momentum conservation of photons, interaction between the three input waves (The single photon, the laser irradiation and the weak signal) and the nonlinear crystal, produces optical parametric amplification (OPA) of the laser irradiation and a signal photon.

The effective area A_{eff} defined as following: ${A}_{eff} = \frac{\int {\int }_{{ℝ}^{2}} {\left|{E}_{t , s}\right|}^{2} d σ \int {{\int }_{{ℝ}^{2}} \left|{E}_{t , p}\right|}^{2} d σ \int {\int }_{{ℝ}^{2}} {\left|{E}_{t , i}\right|}^{2} d σ}{{\left|\int {\int }_{wg} {E}_{t , p} {E}_{t , i} {E}_{t , s} d σ\right|}^{2}}$ (13) where d*σ* is an element of the surface, in the plane orthogonal to the waveguide, *ε*_{t,p} is the TM pump (or single photon) wave ωₚ, and ε_{t,i}, ε_{t,s} is the TE laser eradiation ωᵢ and the signal wave ωₛ respectively. κ is necessary to introduce, because a perfect overlap between modes does not seem to be possible and is given by: $\begin{matrix}κ \approx \frac{{d}_{eff}^{2}}{{n}_{s} {n}_{p} {n}_{s}} \frac{{\left|{∬}_{wg} {E}_{t , p} {E}_{t} {E}_{t , i} {E}_{t , s} d σ\right|}^{2}}{{∬}_{{ℝ}^{2}} {\left|{E}_{t , s}\right|}^{2} d σ {∬}_{{ℝ}^{2}} {\left|{E}_{t , p}\right|}^{2} d σ {∬}_{{ℝ}^{2}} {\left|{E}_{t , i}\right|}^{2} d σ} \\ = \frac{{d}_{eff}^{2}}{{n}_{s} {n}_{p} {n}_{s} {A}_{eff}}\end{matrix}$ (14)

The tensor d_{eff} can often be seen taken outside the integral, due to second-order susceptibility vanishing outside the waveguide core. It can be seen that the effective area *A*_{eff} is inverse proportional to the mode overlap.

γ is introduced and defined as: ${γ}^{2} ≡ \frac{8 {ω}_{s} {ω}_{p}}{{c}^{3} {ε}_{0}} {κP}_{i} ,$ (15)

Where *P*ᵢ is the power of the laser irradiation of the idler wavelength.

Making use of the coupled wave-equations and the assumption of laser irradiation of the idler wavelength, with perfect PhM and no loss, the amplitude of the DFG signal is given by: ${Z}_{s} \left(z\right) = i {\left(\frac{{ω}_{s} {κ}_{s}}{{ω}_{p} {κ}_{p}}\right)}^{1 / 2} {Z}_{p {, 0}^{{e}^{- {iϕ}_{i}}} sin \left(zγ\right) .}$ (16)

The signal intensity is given by the magnitude of the time averaged Poynting vector *P* = 2*nε*₀*c*| 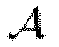 |². The Poynting vector is used to find the generated signal power from eq. 16, where the power is related to the number of photons by *Pᵥ* = *Nᵥ*ℏ*ωᵥ*, where N is the number of photons and ℏ is the reduced Planck constant, returning the conversion efficiency: $\begin{matrix}η & = \frac{{N}_{s} \left(z\right)}{{N}_{p} \left(0\right)} \\ & = {sin}^{2} \left(zγ\right) .\end{matrix}$ (17)

The coherence length ${L}_{coh} \approx \frac{π}{Δ β}$, is introduced in order to relate PhM condition to a more familiar form when discussing the simulations.

As explained previously, a strong confinement in the form of a small A_{eff} is shown to increase the conversion efficiency. This is provided by a passive waveguide, with a large refractive index contrast to its cladding materials. This is the case with SiN grown on fused SiO₂ (silica) and bonded to AlGaAs. The design is simulated in a finite-difference eigen-mode solver (FDE) to achieve modal PhM.

The theoretical assumptions with perfect phasematching, no loss and using the effective area has formerly proven good for PPLN. However, for these III-V material-on-insulator waveguides with strong confinement and modal birefringent PhM another approach has to be employed to consider single-photon conversion. Using the same approach but starting with imperfect PhM, losses and using the simulated electric and magnetic mode profiles, the conversion efficiency can be solved from the coupled amplitude equations. The coupling coefficients is defined as: $\begin{matrix}{κ}_{s} ≡ \frac{{∬}_{wg} {d}_{eff} {E}_{p , y} {E}_{i , x}^{∗} {H}_{s , y}^{∗} d σ}{{n}_{s} {∬}_{wg} {E}_{s , x} {H}_{s , y}^{∗} d σ} \\ {κ}_{p} ≡ \frac{{∬}_{wg} {d}_{eff} {E}_{i , x} {E}_{s , x} {H}_{p , x}^{∗} d σ}{{n}_{s} {∬}_{wg} {E}_{p , x} {H}_{p , y}^{∗} d σ} ,\end{matrix}$ (18)

Where *ε_{v,ψ}*, 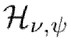 are the complex electric and magnetic fields and *v* is the pump (p), signal (s) or idler (i), and *ψ* indicates the polarization of the mode which can be x (TE) or y (TM).

Gamma is redefined, for the quantum aspect, labelled by *Q*: ${γ}_{Q}^{2} ≡ \frac{8 {ω}_{s} {ω}_{p}}{{c}^{2}} \frac{{κ}_{s} {κ}_{p} {P}_{i}}{\int {\int }_{{ℝ}^{2}} {E}_{i , x} {H}_{i , y}^{*} d σ} ,$ (19)

The wavenumber is split into its real and imaginary components *kᵥ* = *βᵥ + iαᵥ*/2.

The phase and loss mismatch is defined Δ*k* ≡ *k*ₚ - *k*ᵢ - *k*ₛ and Δ*α* ≡ *α*ₚ - *α*ₛ - *α*ᵢ, respectively.

The nonlinear conversion efficiency is found as defined as: $\begin{matrix}η & ≡ {N}_{s} \left(L\right) / {N}_{p} \left(L\right) \\ & = {η}_{max} \left|{γ}_{Q}^{2}{sinc}^{2}\left(ξL/2\right)\right| {L}^{2} {e}^{- L \left(Δα+2{α}_{s}\right) / 2} ,\end{matrix}$ (20)

Where L is the length of the waveguide.

Where *ξ* is given as: ${ξ}^{2} ≡ 4 {γ}_{Q}^{2} + {\left(Δk+{iα}_{i}\right)}^{2} ,$ (21) and *η*ₘₐₓ is the maximal conversion efficiency limited by modal-overlap and interaction with the nonlinear material: ${η}_{max} = \left|\frac{{n}_{p} {∬}_{wg} {E}_{p , y} {E}_{i , x}^{∗} {H}_{s , y}^{∗} d σ}{{n}_{s} {∬}_{wg} {E}_{i , x} {E}_{s , x} {H}_{p , x}^{∗} d σ}\right| .$ (22)

### The Nonlinear Waveguide

A nonlinear waveguide 14 in AlGaAs is preferred for its large reported *d₁₄* ≈ 100 pm/V and refractive index. A schematic of the waveguide structure is shown in Fig. 9 and Fig 11, showing the silica 61 that is grown or deposited on a silicon substrate 62 and the h_{SiN} = 100 nm thick SiN 60 grown and heterogeneously bonded to the AlGaAs nonlinear waveguide 14 as shown in the fig. 9 and 11. The silica 61 is grown on a silicon substrate 62. A h_{SiN} = 100 nm thick SiN layer 60 is grown and heterogeneously bonded with the AlGaAs nonlinear waveguide 14. The desired dimensions of a nonlinear waveguide 14 is edged in the GaAs, with an edge depth *h_{E},* width ω and no top cladding. The AlGaAs film 67 thickness h *- h_{E}* = 15 nm is fixed in the simulations. Three fundamental modes 100, 101, 102 are found by simulations and are depicted in fig. 11.

Simulations sweeps have been carried out with varying thickness. The width is also an important parameter but we observe variations on its value have a lower impact on the phase-matching condition. A sweep is carried out to find perfect PhM, where a small wavenumber mismatch implies a large coherence length. The coherence length is observed changing sign, indicating that perfect PhM is obtainable. The conversion efficiency (eq. 17) is fitted to the simulated data to find the full width at half maximum (FWHM) of the conversion efficiency. This is considered for the fabrication tolerances of the waveguide and is simulated with respect to the waveguide thickness. The FHWM depends on the coherence length, and will as a consequence of this vary at different waveguide lengths. This consideration is important for the feasibility of the design and compared with recent fabrications with the same or lower tolerance, these tolerances are acceptable.

### The multiplexer

The SiN platform allows for low-loss passive and active photonic integrated components, and for chip-scaled solutions that operate over a wide wavelength range. Commercial foundries with a focus on SiN offer standard building blocks of integrated components such as waveguides, multiplexers (also called directional couplers), spot size-converts, etc. This allows for quick and optimized designs in SiN, while reducing costs. It is envisioned to combine the single photon and the laser irradiation to a single SiN waveguide 41 and couple them to the nonlinear GaAs waveguide 14 by a vertical taper 50 as seen in fig. 4 and 5. The goal is to have both the single photon 16 and the laser irradiation 15 in the same input waveguide 41, where it has a probability of conversion to the telecom C-band. Losing a single photon is a loss of information, whereas the loss of photons in the laser irradiation does not impact the efficiency in any appreciable way.

The evanescent multiplexer schematized in fig. 4 and 5 is proposed and simulated by the coupled mode theory (CMT). The multiplexer comprises of two parallel SiN input waveguides 41, 42 of thickness h_{SiN} = 100 nm with silica cladding 64, and a gap t_{g} between them. The simulations constrain the cross-talk to be lower than -20 dB with a coupling length shorter than 1 mm, along with the polarization corresponding to those needed for DFG in GaAs. The coupling length is defined as the propagated distance for complete power-transfer of the second input waveguide to the first input waveguide, and is proportional to the effective phase-mismatch between the waveguides. The single photon is less confined than the laser irradiation as a result of the large wavelength difference, resulting in an evanescent coupling for the single photon and a strong coupling for the laser irradiation. The gap is changed at the first and second wavelength, ±5 nm for validation at nearby wavelengths. The graph in fig. 12 suggests that single photons can be effectively retained in their own waveguide, while the laser irradiation is transferred to it as well. The straight first input waveguide 41 with both single photon and laser irradiation is then vertically tapered to the nonlinear waveguide 14.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. An optical system for frequency conversion of a first wavelength (λₚ) of a single photon by difference-frequency generation (DFG), wherein the optical system (1) comprising
- a single-photon source (12) for supplying a single photon (16) with a first wavelength (λₚ),
- a laser source (11) for generating laser irradiation (15) with a second wavelength (λᵢ),
- a multiplexer (13), being arranged for combining and coupling the single photon and the laser irradiation, and
- a nonlinear waveguide (14), comprising a second-order nonlinear optical susceptibility material for frequency conversion of the single photon,
wherein the multiplexer (13) and the nonlinear waveguide (14) are structurally integrated on a compact platform (10), the compact platform (10) is a photonic integrated circuit (PIC), the multiplexer optically combines the laser irradiation and the single photon, and optically transmits the combined laser irradiation and single photon (17, 18) to the nonlinear waveguide, which is optically connected to the multiplexer, for frequency conversion of the single photon in the nonlinear waveguide by difference-frequency generation by optically interacting with the laser irradiation and the waveguide material, so as to frequency convert the single photon (16, 19) from the first wavelength (λₚ) to a third wavelength (λₛ).

2. The optical system according to claim 1, wherein the multiplexer (13) comprises a first input waveguide (41) for receiving the single photon with a first wavelength (λₚ) and a second input waveguide (42) for receiving the laser irradiation with a second wavelength (λᵢ).

3. The optical system according to any of the claims 2, wherein the laser irradiation and the single photon are optically combined in the first input waveguide (41).

4. The optical system according to any of the claims 1-3, wherein the multiplexer (13) comprises a taper-like coupler (50) for optically transmitting the combined laser irradiation and single photon (17, 18) to the nonlinear waveguide (14).

5. The optical system according to any of the claims 1-4, wherein the combined laser irradiation and single photon (17, 18) are optically transmitted to the nonlinear waveguide (14) by evanescent coupling.

6. The optical system according to any of the claims 1-5, wherein the multiplexer (13) and the nonlinear waveguide (14) are structurally integrated on a compact platform (10) by being grown on the compact platform or bonded to the compact platform.

7. The optical system according to any of the claims 1-6, wherein the conversion efficiency of the nonlinear waveguide (14) is larger than 30%, preferable larger than 50%, more preferable larger than 60%, and even more preferable larger than 80%, and yet even more preferable larger than 90% by
- the nonlinear waveguide being of a material with a sufficiently high optical nonlinearity,
- with a sufficiently low optical loss in the nonlinear waveguide, and/or
- with a sufficiently tight optical confinement of the nonlinear waveguide.

8. The optical system according to claim 7, wherein the second-order optical nonlinearity of the nonlinear waveguide material is larger than 1 pm/V, preferably 50 pm/V, more preferably 100 pm/V.

9. The optical system according to claim 7, wherein the optical loss in the nonlinear waveguide is less than 10 dB/cm, preferably 5 dB/cm, more preferably 1 dB/cm.

10. The optical system according to claim 7, wherein the optical confinement is related to an effective modal area smaller than 20 µm², preferably smaller than 10 µm², and more preferably smaller than 2 µm².

11. The optical system according to claim 7, wherein the input power for the laser source (11) is less than 150 mW, preferably less than 50 mW, more preferably less than 10 mW.

12. The optical system according to any of the preceding claims, wherein the length of the nonlinear waveguide, where the conversion takes place, is shorter than 6 mm, more preferable shorter than 4 mm, and even more preferable shorter than 2 mm.

13. The optical system according to any of the preceding claims, wherein the third wavelength (λₛ) of the single photon is changed by tuning the second wavelength (λᵢ).

14. The optical system according to any of the preceding claims, wherein the nonlinear waveguide (14) is fabricated in III-V semiconductor materials with second-order nonlinear optical susceptibility, preferable the nonlinear waveguide is fabricated in GaP, GaAs and/or AlGaAs.

15. The optical system according to any of the preceding claims, wherein the optical system comprises a linear resonator (99), the linear resonator comprises two wavelength selective, highly reflective sections (90, 91), and the nonlinear waveguide (14).

16. The optical system according to any of the preceding claims, wherein there is a filter (92) after the nonlinear waveguide (14), and the filter is a ring resonator (92).

17. The optical system according to any of the preceding claims, wherein the optical system comprises a ring resonator (100); the multiplexer (13) and the nonlinear waveguide (14) is integrated as or with the ring resonator.

18. The optical system according to any of the preceding claims, wherein the optical system comprises two or more nonlinear waveguides (14, 109); the output signal (119) generated in one nonlinear waveguide (109) is one of the input signals (119) to the next nonlinear waveguides (14), and the single photon (19) generated in the last nonlinear waveguide (14) is the output single photon with the third wavelength (λₛ) (19).

19. The optical system according to any of the preceding claims, wherein the optical system generates a continouos beam of mid-infrared or visible irradiation (125).

20. A method for frequency conversion of a single photon in an optical system by difference-frequency generation (DFG), wherein the optical system (1) comprising
- a single-photon source (12) for supplying a single photon (16) with a first wavelength (λₚ),
- a laser source (11) for generating laser irradiation (15) with a second wavelength (λᵢ),
- a multiplexer (13), being arranged for combining and coupling the single photon and the laser irradiation, and
- a nonlinear waveguide (14), comprising a second-order nonlinear optical susceptibility material for frequency conversion of the single photon,
wherein the multiplexer (13) and the nonlinear waveguide (14) are structurally integrated on a compact platform (10), the compact platform (10) is a photonic integrated circuit (PIC),
the method comprises the steps:
- supplying a single photon (16) with a wavelength λₚ by the single photon source (12),
- generating laser irradiation (15) with a wavelength λᵢ by a laser source (11),
- optically combining the laser irradiation and the single photon in the multiplexer (13),
- transmitting the combined laser irradiation and single photon from the multiplexer (13) to the nonlinear waveguide (14), which is optically connected to the multiplexer,
- converting, in the nonlinear waveguide, by difference-frequency generation the single photon by optically interacting with the laser irradiation and the waveguide material, so as to frequency convert the single photon from the first wavelength (λₚ) to a third wavelength (λₛ).

21. A frequency converter for frequency conversion of a first wavelength (λₚ) of a single photon by difference-frequency generation (DFG), wherein the frequency converter (21) comprising
- means for receiving a single photon (16) with a first wavelength (λₚ),
- means for receiving laser irradiation (15) with a second wavelength (λᵢ),
- a multiplexer (13), being arranged for combining and coupling the single photon and the laser irradiation, and
- a nonlinear waveguide (14), comprising a second-order nonlinear optical susceptibility material for frequency conversion of the single photon,
wherein the multiplexer and the nonlinear waveguide are structurally integrated on a compact platform (10), the compact platform (10) is a photonic integrated circuit (PIC), the multiplexer (13) optically combines the laser irradiation and the single photon, and optically transmits the combined laser irradiation and single photon to the nonlinear waveguide (14), which is optically connected to the multiplexer, for frequency conversion of the single photon in the nonlinear waveguide by difference-frequency generation by optically interacting with the laser irradiation and the waveguide material, so as to frequency convert the single photon from the first wavelength (λₚ) to a third wavelength (λₛ).

## Patentansprüche

1. Optisches System zur Frequenzumwandlung einer ersten Wellenlänge (λ_{P}) eines Einzelphotons durch Differenzfrequenzerzeugung (DFG), wobei das optische System (1) umfasst
- eine Einzelphotonenquelle (12) zum Versorgen eines Einzelphotons (16) mit einer ersten Wellenlänge (λ_{P}),
- eine Laserquelle (11) zum Erzeugen von Laserbestrahlung (15) mit einer zweiten Wellenlänge (λᵢ),
- einen Multiplexer (13), der zum Kombinieren und Koppeln des Einzelphotons und der Laserbestrahlung angeordnet ist, und
- einen nichtlinearen Wellenleiter (14), der ein Material mit nichtlinearer optischer Suszeptibilität zweiter Ordnung zur Frequenzumwandlung des Einzelphotons umfasst,
wobei der Multiplexer (13) und der nichtlineare Wellenleiter (14) strukturell auf einer kompakten Plattform (10) integriert sind, die kompakte Plattform (10) eine photonische integrierte Schaltung (PIC) ist, der Multiplexer die Laserbestrahlung und das Einzelphoton optisch kombiniert und die kombinierte Laserbestrahlung und das Einzelphoton (17, 18) optisch an den nichtlinearen Wellenleiter, der optisch mit dem Multiplexer verbunden ist, zur Frequenzumwandlung des Einzelphotons in dem nichtlinearen Wellenleiter durch Differenzfrequenzerzeugung durch optische Wechselwirkung zwischen der Laserbestrahlung und dem Wellenleitermaterial überträgt, so dass das Einzelphoton (16, 19) von der ersten Wellenlänge (λ_{P}) auf eine dritte Wellenlänge (λₛ) frequenzumgewandelt wird.

2. Optisches System nach Anspruch 1, wobei der Multiplexer (13) einen ersten Eingangswellenleiter (41) zum Empfangen des Einzelphotons mit einer ersten Wellenlänge (λ_{P}) und einen zweiten Eingangswellenleiter (42) zum Empfangen der Laserbestrahlung mit einer zweiten Wellenlänge (λᵢ) umfasst.

3. Optisches System nach Anspruch 2, wobei die Laserbestrahlung und das Einzelphoton in dem ersten Eingangswellenleiter (41) optisch kombiniert werden.

4. Optisches System nach einem der Ansprüche 1 bis 3, wobei der Multiplexer (13) einen verjüngungsartigen Koppler (50) zum optischen Übertragen der kombinierten Laserbestrahlung und des Einzelphotons (17, 18) an den nichtlinearen Wellenleiter (14) umfasst.

5. Optisches System nach einem der Ansprüche 1 bis 4, wobei die kombinierte Laserbestrahlung und das Einzelphoton (17, 18) durch evaneszente Kopplung optisch an den nichtlinearen Wellenleiter (14) übertragen werden.

6. Optisches System nach einem der Ansprüche 1 bis 5, wobei der Multiplexer (13) und der nichtlineare Wellenleiter (14) strukturell auf einer kompakten Plattform (10) integriert sind, indem sie auf der kompakten Plattform aufgewachsen oder mit der kompakten Plattform verklebt sind.

7. Optisches System nach einem der Ansprüche 1 bis 6, wobei der Umwandlungswirkungsgrad des nichtlinearen Wellenleiters (14) größer als 30 %, vorzugsweise größer als 50 %, bevorzugter größer als 60 % und noch bevorzugter größer als 80 % und sogar noch bevorzugter größer als 90 % ist, und zwar dadurch, dass
- der nichtlineare Wellenleiter aus einem Material besteht mit einer ausreichend hohen optischen Nichtlinearität,
- mit einem ausreichend geringen optischen Verlust in dem nichtlinearen Wellenleiter, und/oder
- mit einem ausreichend engen optischen Einschluss des nichtlinearen Wellenleiters.

8. Optisches System nach Anspruch 7, wobei die optische Nichtlinearität zweiter Ordnung des nichtlinearen Wellenleitermaterials größer als 1 pm/V, bevorzugt 50 pm/V, bevorzugter 100 pm/V ist.

9. Optisches System nach Anspruch 7, wobei der optische Verlust in dem nichtlinearen Wellenleiter weniger als 10 dB/cm, bevorzugt 5 dB/cm, bevorzugter 1 dB/cm beträgt.

10. Optisches System nach Anspruch 7, wobei sich der optische Einschluss auf eine effektive Modalfläche bezieht, die kleiner als 20 µm², bevorzugt kleiner als 10 µm² und bevorzugter kleiner als 2 µm² ist.

11. Optisches System nach Anspruch 7, wobei die Eingangsleistung für die Laserquelle (11) weniger als 150 mW, bevorzugt weniger als 50 mW, bevorzugter weniger als 10 mW beträgt.

12. Optisches System nach einem der vorstehenden Ansprüche, wobei die Länge des nichtlinearen Wellenleiters, bei dem die Umwandlung stattfindet, kürzer als 6 mm, bevorzugter kürzer als 4 mm und noch bevorzugter kürzer als 2 mm ist.

13. Optisches System nach einem der vorstehenden Ansprüche, wobei die dritte Wellenlänge (λₛ) des Einzelphotons durch Abstimmen der zweiten Wellenlänge (λᵢ) verändert wird.

14. Optisches System nach einem der vorstehenden Ansprüche, wobei der nichtlineare Wellenleiter (14) aus III-V-Halbleitermaterialien mit nichtlinearer optischer Suszeptibilität zweiter Ordnung hergestellt ist, vorzugsweise ist der nichtlineare Wellenleiter aus GaP, GaAs und/oder AlGaAs hergestellt.

15. Optisches System nach einem der vorstehenden Ansprüche, wobei das optische System einen linearen Resonator (99) umfasst, der lineare Resonator zwei wellenlängenselektive, hochreflektierende Abschnitte (90, 91) und den nichtlinearen Wellenleiter (14) umfasst.

16. Optisches System nach einem der vorstehenden Ansprüche, wobei nach dem nichtlinearen Wellenleiter (14) ein Filter (92) vorhanden ist, und das Filter ein Ringresonator (92) ist.

17. Optisches System nach einem der vorstehenden Ansprüche, wobei das optische System einen Ringresonator (100) umfasst; der Multiplexer (13) und der nichtlineare Wellenleiter (14) als der Ringresonator oder mit diesem integriert sind.

18. Optisches System nach einem der vorstehenden Ansprüche, wobei das optische System zwei oder mehr nichtlineare Wellenleiter (14, 109) umfasst; das in einem nichtlinearen Wellenleiter (109) erzeugte Ausgangssignal (119) eines der Eingangssignale (119) zu den nächsten nichtlinearen Wellenleitern (14) ist, und das in dem letzten nichtlinearen Wellenleiter (14) erzeugte Einzelphoton (19) das Ausgangs-Einzelphoton mit der dritten Wellenlänge (λₛ) (19) ist.

19. Optisches System nach einem der vorstehenden Ansprüche, wobei das optische System einen kontinuierlichen Strahl mittelinfraroter oder sichtbarer Bestrahlung (125) erzeugt.

20. Verfahren zur Frequenzumwandlung eines Einzelphotons in einem optischen System durch Differenzfrequenzerzeugung (DFG), wobei das optische System (1) umfasst
- eine Einzelphotonenquelle (12) zum Versorgen eines Einzelphotons (16) mit einer ersten Wellenlänge (λ_{P}),
- eine Laserquelle (11) zum Erzeugen von Laserbestrahlung (15) mit einer zweiten Wellenlänge (λᵢ),
- einen Multiplexer (13), der zum Kombinieren und Koppeln des Einzelphotons und der Laserbestrahlung angeordnet ist, und
- einen nichtlinearen Wellenleiter (14), der ein Material mit nichtlinearer optischer Suszeptibilität zweiter Ordnung zur Frequenzumwandlung des Einzelphotons umfasst,
wobei der Multiplexer (13) und der nichtlineare Wellenleiter (14) strukturell auf einer kompakten Plattform (10) integriert sind, die kompakte Plattform (10) eine photonische integrierte Schaltung (PIC) ist,
wobei das Verfahren die folgenden Schritte umfasst:
- Versorgen eines Einzelphotons (16) mit einer Wellenlänge λ_{P} durch die Einzelphotonenquelle (12),
- Erzeugen einer Laserbestrahlung (15) mit einer Wellenlänge λᵢ durch eine Laserquelle (11),
- optisches Kombinieren der Laserbestrahlung und des Einzelphotons in dem Multiplexer (13),
- Übertragen der kombinierten Laserbestrahlung und des Einzelphotons von dem Multiplexer (13) an den nichtlinearen Wellenleiter (14), der optisch mit dem Multiplexer verbunden ist,
- Umwandeln, in dem nichtlinearen Wellenleiter, durch Differenzfrequenzerzeugung des Einzelphotons durch optische Wechselwirkung zwischen der Laserbestrahlung und dem Wellenleitermaterial, so dass das Einzelphoton von der ersten Wellenlänge (λ_{P}) in eine dritte Wellenlänge (λₛ) umgewandelt wird.

21. Frequenzwandler zur Frequenzumwandlung einer ersten Wellenlänge (λ_{P}) eines Einzelphotons durch Differenzfrequenzerzeugung (DFG), wobei der Frequenzwandler (21) umfasst
- Mittel zum Empfangen eines Einzelphotons (16) mit einer ersten Wellenlänge (λ_{P}),
- Mittel zum Empfangen von Laserbestrahlung (15) mit einer zweiten Wellenlänge (λᵢ),
- einen Multiplexer (13), der zum Kombinieren und Koppeln des Einzelphotons und der Laserbestrahlung angeordnet ist, und
- einen nichtlinearen Wellenleiter (14), der ein Material mit nichtlinearer optischer Suszeptibilität zweiter Ordnung zur Frequenzumwandlung des Einzelphotons umfasst,
wobei der Multiplexer und der nichtlineare Wellenleiter strukturell auf einer kompakten Plattform (10) integriert sind, die kompakte Plattform (10) eine photonische integrierte Schaltung (PIC) ist, der Multiplexer (13) die Laserbestrahlung und das Einzelphoton optisch kombiniert und die kombinierte Laserbestrahlung und das Einzelphoton optisch an den nichtlinearen Wellenleiter (14), der optisch mit dem Multiplexer verbunden ist, zur Frequenzumwandlung des Einzelphotons in dem nichtlinearen Wellenleiter durch Differenzfrequenzerzeugung durch optische Wechselwirkung zwischen der Laserbestrahlung und dem Wellenleitermaterial überträgt, so dass das Einzelphoton von der ersten Wellenlänge (λ_{P}) auf eine dritte Wellenlänge (λₛ) frequenzumgewandelt wird.

## Revendications

1. Système optique de conversion de fréquence d'une première longueur d'onde (λ_{P}) d'un photon unique par génération de fréquence différentielle (DFG), dans lequel le système optique (1) comprend
- une source (12) de photon unique pour alimenter un photon unique (16) d'une première longueur d'onde (λ_{P}),
- une source laser (11) pour générer une irradiation laser (15) d'une deuxième longueur d'onde (λᵢ),
- un multiplexeur (13), agencé pour combiner et coupler le photon unique et l'irradiation laser, et
- un guide d'ondes (14) non linéaire, comprenant un matériau à susceptibilité optique non linéaire de deuxième ordre pour la conversion de fréquence du photon unique,
dans lequel le multiplexeur (13) et le guide d'ondes (14) non linéaire sont intégrés structurellement sur une plateforme compacte (10), la plateforme compacte (10) est un circuit intégré photonique (PIC), le multiplexeur combine optiquement l'irradiation laser et le photon unique, et transmet optiquement l'irradiation laser combinée et le photon unique (17, 18) au guide d'ondes non linéaire, qui est relié optiquement au multiplexeur, pour la conversion de fréquence du photon unique dans le guide d'ondes non linéaire par génération de fréquence différentielle en interagissant optiquement avec l'irradiation laser et le matériau de guide d'ondes, de sorte à convertir en fréquence le photon unique (16, 19) de la première longueur d'onde (λ_{P}) à une troisième longueur d'onde (λₛ).

2. Système optique selon la revendication 1, dans lequel le multiplexeur (13) comprend un premier guide d'ondes d'entrée (41) pour recevoir le photon unique d'une première longueur d'onde (λ_{P}) et un deuxième guide d'ondes d'entrée (42) pour recevoir l'irradiation laser d'une deuxième longueur d'onde (λᵢ).

3. Système optique selon l'une quelconque des revendications 2, dans lequel l'irradiation laser et le photon unique sont combinés optiquement dans le premier guide d'ondes d'entrée (41).

4. Système optique selon l'une quelconque des revendications 1 à 3, dans lequel le multiplexeur (13) comprend un coupleur conique (50) pour transmettre optiquement l'irradiation laser combinée et le photon unique (17, 18) au guide d'ondes (14) non linéaire.

5. Système optique selon l'une quelconque des revendications 1 à 4, dans lequel l'irradiation laser combinée et le photon unique (17, 18) sont transmis optiquement au guide d'ondes (14) non linéaire par couplage évanescent.

6. Système optique selon l'une quelconque des revendications 1 à 5, dans lequel le multiplexeur (13) et le guide d'ondes (14) non linéaire sont intégrés structurellement sur une plateforme compacte (10) en étant mis à croître sur la plateforme compacte ou en étant liés à la plateforme compacte.

7. Système optique selon l'une quelconque des revendications 1 à 6, dans lequel l'efficacité de conversion du guide d'ondes (14) non linéaire est supérieure à 30 %, préférablement supérieure à 50 %, plus préférablement supérieure à 60 %, et encore plus préférablement supérieure à 80 %, et encore plus préférablement supérieure à 90 % par
- le fait que le guide d'ondes non linéaire soit d'un matériau d'une non-linéarité optique suffisamment élevée,
- avec une perte optique suffisamment basse dans le guide d'ondes non linéaire, et/ou
- avec un confinement optique suffisamment serré du guide d'ondes non linéaire.

8. Système optique selon la revendication 7, dans lequel la non-linéarité optique de deuxième ordre du matériau de guide d'ondes non linéaire est supérieure à 1 pm/V, préférablement 50 pm/V, plus préférablement 100 pm/V.

9. Système optique selon la revendication 7, dans lequel la perte optique dans le guide d'ondes non linéaire est inférieure à 10 dB/cm, préférablement 5 dB/cm, plus préférablement 1 dB/cm.

10. Système optique selon la revendication 7, dans lequel le confinement optique est lié à une aire modale efficace inférieure à 20 µm², préférablement inférieure à 10 µm² et plus préférablement inférieure à 2 µm².

11. Système optique selon la revendication 7, dans lequel la puissance d'entrée pour la source laser (11) est inférieure à 150 mW, préférablement inférieure à 50 mW, plus préférablement inférieure à 10 mW.

12. Système optique selon l'une quelconque des revendications précédentes, dans lequel la longueur du guide d'ondes non linéaire, où la conversion a lieu, est inférieure à 6 mm, plus préférablement inférieure à 4 mm, et encore plus préférablement inférieure à 2 mm.

13. Système optique selon l'une quelconque des revendications précédentes, dans lequel la troisième longueur d'onde (λₛ) du photon unique est modifiée en ajustant la deuxième longueur d'onde (λᵢ).

14. Système optique selon l'une quelconque des revendications précédentes, dans lequel le guide d'ondes (14) non linéaire est fabriqué en matériaux semi-conducteurs III-V d'une susceptibilité optique non linéaire de deuxième ordre, de préférence le guide d'ondes non linéaire est fabriqué en GaP, GaAs et/ou AIGaAs.

15. Système optique selon l'une quelconque des revendications précédentes, dans lequel le système optique comprend un résonateur linéaire (99), le résonateur linéaire comprend deux sections sélectives en longueur d'onde, hautement réfléchissantes (90, 91), et le guide d'ondes (14) non linéaire.

16. Système optique selon l'une quelconque des revendications précédentes, dans lequel il y a un filtre (92) après le guide d'ondes (14) non linéaire, et le filtre est un résonateur annulaire (92).

17. Système optique selon l'une quelconque des revendications précédentes, dans lequel le système optique comprend un résonateur annulaire (100) ; le multiplexeur (13) et le guide d'ondes (14) non linéaire sont intégrés en tant que ou avec le résonateur annulaire.

18. Système optique selon l'une quelconque des revendications précédentes, dans lequel le système optique comprend deux guides d'ondes (14, 109) non linéaires ou plus ; le signal (119) délivré en sortie dans un guide d'ondes (109) non linéaire est l'un des signaux d'entrée (119) vers les guides d'ondes (14) non linéaires suivants, et le photon unique (19) généré dans le dernier guide d'ondes (14) non linéaire est le photon unique délivré en sortie avec la troisième longueur d'onde (λₛ) (19).

19. Système optique selon l'une quelconque des revendications précédentes, dans lequel le système optique génère un faisceau continu d'irradiation infrarouge moyen ou visible (125).

20. Procédé de conversion de fréquence d'un photon unique dans un système optique par génération de fréquence différentielle (DFG), dans lequel le système optique (1) comprend
- une source (12) de photon unique pour alimenter un photon unique (16) d'une première longueur d'onde (λ_{P}),
- une source laser (11) pour générer une irradiation laser (15) d'une deuxième longueur d'onde (λᵢ),
- un multiplexeur (13), agencé pour combiner et coupler le photon unique et l'irradiation laser, et
- un guide d'ondes (14) non linéaire, comprenant un matériau à susceptibilité optique non linéaire de deuxième ordre pour la conversion de fréquence du photon unique,
dans lequel le multiplexeur (13) et le guide d'ondes (14) non linéaire sont structurellement intégrés sur une plateforme compacte (10), la plateforme compacte (10) est un circuit intégré photonique (PIC),
le procédé comprend les étapes suivantes :
- l'alimentation d'un photon unique (16) d'une longueur d'onde λ_{P} par la source (12) de photon unique,
- la génération d'une irradiation laser (15) d'une longueur d'onde λᵢ par une source laser (11),
- la combinaison optique de l'irradiation laser et du photon unique dans le multiplexeur (13),
- la transmission de l'irradiation laser combinée et du photon unique du multiplexeur (13) au guide d'ondes (14) non linéaire, qui est relié optiquement au multiplexeur,
- la conversion, dans le guide d'ondes non linéaire, par génération de fréquence différentielle du photon unique en interagissant optiquement avec l'irradiation laser et le matériau de guide d'ondes, de sorte à convertir en fréquence le photon unique de la première longueur d'onde (λ_{P}) à une troisième longueur d'onde (λₛ).

21. Convertisseur de fréquence pour une conversion de fréquence d'une première longueur d'onde (λ_{P}) d'un photon unique par génération de fréquence différentielle (DFG), dans lequel le convertisseur de fréquence (21) comprend
- des moyens de réception d'un photon unique (16) d'une première longueur d'onde (λ_{P}),
- des moyens de réception d'une irradiation laser (15) d'une deuxième longueur d'onde (λᵢ),
- un multiplexeur (13), agencé pour combiner et coupler le photon unique et l'irradiation laser, et
- un guide d'ondes (14) non linéaire, comprenant un matériau à susceptibilité optique non linéaire de deuxième ordre pour la conversion de fréquence du photon unique,
dans lequel le multiplexeur et le guide d'ondes non linéaire sont intégrés structurellement sur une plateforme compacte (10), la plateforme compacte (10) est un circuit intégré photonique (PIC), le multiplexeur (13) combine optiquement l'irradiation laser et le photon unique, et transmet optiquement l'irradiation laser combinée et le photon unique au guide d'ondes (14) non linéaire, qui est relié optiquement au multiplexeur, pour la conversion de fréquence du photon unique dans le guide d'ondes non linéaire par génération de fréquence différentielle en interagissant optiquement avec l'irradiation laser et le matériau de guide d'ondes, de sorte à convertir en fréquence le photon unique de la première longueur d'onde (λ_{P}) à une troisième longueur d'onde (λₛ).
